# EUROPEAN PATENT SPECIFICATION

(11) **EP 3 146 733 B1**
(45) Date of publication and mention of the grant of the patent: **28.10.2020**
(21) Application number: 15718054.8
(22) Date of filing: 06.04.2015
(51) Int. Cl.: H04W 4/50, H04W 4/70, G08C 17/02

(54) **TRIGGERING COMMANDS ON A TARGET DEVICE IN RESPONSE TO BROADCASTED EVENT NOTIFICATIONS**
AUSLÖSUNG VON BEFEHLEN AUF EINER ZIELVORRICHTUNG ALS ANTWORT AUF ÜBERTRAGENE EREIGNISBENACHRICHTIGUNGEN
INSTRUCTIONS DE DÉCLENCHEMENT SUR UN DISPOSITIF CIBLE EN RÉPONSE À DES NOTIFICATIONS D'ÉVÉNEMENTS DIFFUSÉES

(30) Priority: 21.05.2014 US 201462001424 P; 03.04.2015 US 201514678803
(43) Date of publication of application: 29.03.2017
(73) Proprietor: Qualcomm Incorporated, San Diego, CA 92121-1714 (US)
(72) Inventor: MESSING, Deborah, HF 99019 Beit-Shemesh (IL); GLICKFIELD, Sarah, St. Louis, Missouri 63124 (US); SPENCER, Brian J., San Diego, California 92121-1714 (US); VOGELSANG, Brian Douglas, San Diego, California 92121-1714 (US)
(74) Representative: Tomkins & Co
(86) International application number: PCT/US2015/024561
(87) International publication number: WO 2015/179031

(56) References cited:
- EP-A1- 2 563 092
- WO-A1-2009/079036
- US-A1- 2007 124 424
- US-A1- 2013 151 708
- "3rd Generation Partnership Project; Technical Specification Group Services and System Aspects; Architecture enhancements to facilitate communications with packet data networks and applications (Release 11)", 3GPP DRAFT; 23682-B30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 14 February 2013 (2013-02-14), XP050707875, Retrieved from the Internet: URL:http://www.3gpp.org/ftp/tsg_sa/WG2_Arc h/Latest_SA2_Specs/ [retrieved on 2013-02-14]

## Description

### TECHNICAL FIELD

Various embodiments described herein generally relate to triggering commands on a target device in response to event notifications broadcasted from a source device.

### BACKGROUND

The Internet is a global system of interconnected computers and computer networks that use a standard Internet protocol suite (e.g., the Transmission Control Protocol (TCP) and Internet Protocol (IP)) to communicate with each other. An example of a network is disclosed in WO 2009/079036 which discuses a sensor manager for wired and wireless networks. The Internet of Things (IoT) is based on the idea that everyday objects, not just computers and computer networks, can be readable, recognizable, locatable, addressable, and controllable via an IoT communications network (e.g., an ad-hoc system or the Internet).

A number of market trends are driving development of IoT devices. For example, increasing energy costs are driving governments' strategic investments in smart grids and support for future consumption, such as for electric vehicles and public charging stations. Increasing health care costs and aging populations are driving development for remote/connected health care and fitness services. A technological revolution in the home is driving development for new "smart" services, including consolidation by service providers marketing 'N' play (e.g., data, voice, video, security, energy management, etc.) and expanding home networks. Buildings are getting smarter and more convenient as a means to reduce operational costs for enterprise facilities.

There are a number of key applications for the IoT. For example, in the area of smart grids and energy management, utility companies can optimize delivery of energy to homes and businesses while customers can better manage energy usage. In the area of home and building automation, smart homes and buildings can have centralized control over virtually any device or system in the home or office, from appliances to plug-in electric vehicle (PEV) security systems. In the field of asset tracking, enterprises, hospitals, factories, and other large organizations can accurately track the locations of high- value equipment, patients, vehicles, and so on. In the area of health and wellness, doctors can remotely monitor patients' health while people can track the progress of fitness routines.

Accordingly, in the near future, increasing development in IoT technologies will lead to numerous IoT devices surrounding a user at home, in vehicles, at work, and many other locations and personal spaces. In that context, many users may interact with different devices within particular environments in interrelated ways. However, existing solutions tend to fall short in providing mechanisms to link event notifications and control commands that heterogeneous devices support to automate common or routine activities that may be logically related. For example, during the winter, many people turn the temperature on a home thermostat down overnight to save on heating costs and then increase the temperature upon waking up in the morning. As such, a solution that could automatically increase the temperature on the thermostat in response to an event notification indicating that a user just woke up (e.g., an alarm clock ringing) would eliminate the need to have the user manually increase the temperature in the morning and further eliminate or substantially reduce the need to configure the thermostat to increase the temperature according to a schedule. Although certain solutions that support event notifications and control commands exist (for example the implementation of an internet of things service disclosed in EP 2 563 092), the existing solutions tend to lack mechanisms that allow users to link or otherwise chain event notifications and control commands such that certain events or control commands are invoked when one or more specific triggering events occur. US 2007/0124424 discloses a program and device for linking operations between multiple connected devices.

### SUMMARY

The present disclosure is directed towards methods, devices, and storage mediums, the features of which are set out in the appended claims set. The following presents a simplified summary relating to one or more aspects and/or embodiments disclosed herein. As such, the following summary should not be considered an extensive overview relating to all contemplated aspects and/or embodiments, nor should the following summary be regarded to identify key or critical elements relating to all contemplated aspects and/or embodiments or to delineate the scope associated with any particular aspect and/or embodiment. Accordingly, the following summary has the sole purpose to present certain concepts relating to one or more aspects and/or embodiments relating to the mechanisms disclosed herein in a simplified form to precede the detailed description presented below.

According to one exemplary aspect, the following description generally relates to various mechanisms that can be used to trigger commands on a target device in response to event notifications broadcasted from a source device. More particularly, because increasing development in Internet of Things (IoT) technologies will lead to numerous IoT devices surrounding a user at home, in vehicles, at work, and many other locations and personal spaces in the near future, many users will interact with different devices within particular environments in interrelated ways. Accordingly, various mechanisms described in further detail herein may allow users to link event notifications and control commands that heterogeneous devices support to automate common, routine, or otherwise logically related activities. For example, in various embodiments, when an event notification broadcasted from a source device arrives at a control device (e.g., a smartphone or another suitable device), a user may be presented with an option to link the event notification to commands that can be triggered on a target device and thereby control the target device. As such, in response to the user selecting the option to link the event notification to a command on one or more other devices, the user may be shown one or more controllable target devices that support commands that can be linked to the event notification and the user may then select or otherwise define the particular commands to automatically trigger on the controllable target devices when the event notification occurs again in the future. For example, in one use case, the control device may store the trigger definition such that the control device may automatically call or otherwise invoke the command on the controllable target devices in response to the source device broadcasting the linked event notification again in the future. In another use case, the control device may push the trigger definition and the command linked to the event notification to the source device that originally broadcasted the event notification, wherein the source device may then invoke the linked command on the controllable target devices when broadcasting the event notification again in the future. In still another use case, the control device may configure a listener on the controllable target devices such that the controllable target devices may listen for the event notification from the broadcasting source device and then invoke the linked command in response to the local configured listener detecting the event notification broadcasted from the source device.

According to another exemplary aspect, a method for triggering commands based on event notifications may comprise identifying, at a control device, an event notification supported on a first device, identifying, at the control device, a command supported on a second device, and defining, at the control device, a trigger that links the event notification supported on the first device to the command supported on the second device, wherein the defined trigger causes the second device to execute the identified command in response to the first device broadcasting the identified event notification. Additionally, in various embodiments, the method may further comprise storing the trigger that links the event notification supported on the first device to the command supported on the second device at the control device, detecting a broadcast from the first device that includes the identified event notification at the control device, and transmitting, from the control device to the second device, a message that causes the second device to execute the command associated with the stored trigger in response to detecting the broadcast that includes the identified event notification. In alternative (or additional) embodiments, the method may further comprise transmitting, from the control device to the first device, the trigger that links the event notification supported on the first device to the command supported on the second device, wherein the transmitted trigger causes the first device to invoke the command on the second device when the first device broadcasts the identified event notification and/or configuring, by the control device, a listener associated with the defined trigger on the second device, wherein the configured listener causes the second device to listen for the identified event notification and execute the identified command in response to detecting that the first device broadcasted the event notification linked to the identified command. Furthermore, in various embodiments, defining the trigger that links the event notification on the first device to the command on the second device may further comprise deactivating one or more existing triggers that link the identified event notification to one or more commands that conflict with the command on the second device.

According to another exemplary aspect, a control device for triggering commands based on event notifications may comprise means for identifying an event notification supported on a first device, means for identifying a command supported on a second device, and means for defining a trigger that links the event notification supported on the first device to the command supported on the second device, wherein the defined trigger causes the second device to execute the identified command in response to the first device broadcasting the identified event notification. Additionally, in various embodiments, the control device may further comprise means for storing the trigger that links the event notification supported on the first device to the command supported on the second device, means for detecting a broadcast from the first device that includes the identified event notification, and means for transmitting, to the second device, a message that causes the second device to execute the command associated with the stored trigger in response to detecting the broadcast that includes the identified event notification. In alternative (or additional) embodiments, the control device may further comprise means for transmitting, to the first device, the trigger that links the event notification supported on the first device to the command supported on the second device, wherein the transmitted trigger causes the first device to invoke the command on the second device when the first device broadcasts the identified event notification and/or means for configuring a listener associated with the defined trigger on the second device, wherein the configured listener causes the second device to listen for the identified event notification and execute the identified command in response to detecting that the first device broadcasted the event notification linked to the identified command. Furthermore, in various embodiments, the means for defining the trigger that links the event notification on the first device to the command on the second device may deactivate one or more existing triggers that link the identified event notification to a command that conflicts with the command supported on the second device.

According to another exemplary aspect, an apparatus may comprise one or more processors configured to identify an event notification supported on a first device, identify a command supported on a second device, and define a trigger that links the event notification supported on the first device to the command supported on the second device, wherein the defined trigger causes the second device to execute the identified command in response to the first device broadcasting the identified event notification. Moreover, in various embodiments, the apparatus may further comprise a memory configured to store the trigger that links the event notification supported on the first device to the command supported on the second device and a transceiver configured to receive a broadcast from the first device that includes the identified event notification and transmit, to the second device, a message that causes the second device to execute the command associated with the stored trigger in response to receiving the broadcast that includes the identified event notification. In alternative (or additional) embodiments, the transceiver may be configured to transmit, to the first device, the trigger that links the event notification supported on the first device to the command supported on the second device, wherein the transmitted trigger causes the first device to invoke the command on the second device when the first device broadcasts the identified event notification and/or to communicate with the second device to configure a listener associated with the defined trigger on the second device, wherein the configured listener causes the second device to listen for the identified event notification and execute the identified command in response to detecting that the first device broadcasted the event notification linked to the identified command. Furthermore in various embodiments, the one or more processors may be further configured to deactivate one or more existing triggers that link the identified event notification to a command that conflicts with the command supported on the second device.

According to another exemplary aspect, a computer-readable storage medium may have computer-executable instructions recorded thereon, wherein executing the computer-executable instructions on a computer may cause the computer to identify an event notification supported on a first device, identify a command supported on a second device, and define a trigger that links the event notification supported on the first device to the command supported on the second device, wherein the defined trigger causes the second device to execute the identified command in response to the first device broadcasting the identified event notification. Additionally, in various embodiments, executing the computer-executable instructions on the computer may further cause the computer to store the trigger that links the event notification supported on the first device to the command supported on the second device, detect a broadcast from the first device that includes the identified event notification, and transmit, to the second device, a message that causes the second device to execute the command associated with the stored trigger in response to detecting the broadcast that includes the identified event notification. In alternative (or additional) embodiments, the computer-executable instructions may further cause the computer to transmit, to the first device, the trigger that links the event notification supported on the first device to the command supported on the second device, wherein the transmitted trigger causes the first device to invoke the command on the second device when the first device broadcasts the identified event notification, configure a listener associated with the defined trigger on the second device, wherein the configured listener causes the second device to listen for the identified event notification and execute the identified command in response to detecting that the first device broadcasted the event notification linked to the identified command, and/or deactivate one or more existing triggers that link the identified event notification to a command that conflicts with the command supported on the second device

Other objects and advantages associated with the aspects and embodiments disclosed herein will be apparent to those skilled in the art based on the accompanying drawings and detailed description.

### BRIEF DESCRIPTION OF THE DRAWINGS

A more complete appreciation of the various aspects and embodiments described herein and many attendant advantages thereof will be readily obtained as the same becomes better understood by reference to the following detailed description when considered in connection with the accompanying drawings which are presented solely for illustration and not limitation, and in which:
FIGS. 1A-1E illustrate exemplary high-level system architectures of wireless communications systems in which event notifications broadcasted from source devices may be used to trigger commands on target devices, according to various aspects.
FIG. 2A illustrates an exemplary Internet of Things (IoT) device and FIG. 2B illustrates an exemplary passive IoT device, according to various aspects.
FIG. 3 illustrates a communication device that includes logic configured to perform functionality, according to various aspects.
FIG. 4 illustrates an exemplary server, according to various aspects.
FIG. 5 illustrates a wireless communication network that may support discoverable device-to-device (D2D) (or peer-to-peer (P2P)) services that can enable direct D2D communication, according to various aspects.
FIG. 6 illustrates an exemplary environment in which discoverable D2D services may be used to establish a proximity-based distributed bus over which various devices may communicate using D2D technology, according to various aspects.
FIG. 7 illustrates an exemplary message sequence in which discoverable D2D services may be used to establish a proximity-based distributed bus over which various devices may communicate using D2D technology, according to various aspects.
FIG. 8A illustrates an exemplary proximity-based distributed bus that may be formed between two host devices to support D2D communication between the host devices, while FIG. 8B illustrates an exemplary proximity-based distributed bus in which one or more embedded devices may connect to a host device to connect to the proximity-based distributed bus, according to various aspects.
FIG. 9 and FIG. 10 respectively illustrate an exemplary call flow and method in which a control device may trigger commands on a target device in response to detecting an event notification broadcasted from a source device, according to various aspects.
FIG. 11 and FIG. 12 respectively illustrate an exemplary call flow and method in which a control device may configure a source device to trigger a command on a target device in response to detecting an event notification broadcasted from the source device, according to various aspects.
FIG. 13 and FIG. 14 respectively illustrate an exemplary call flow and method in which a control device may configure a target device to listen for an event notification broadcasted from a source device and trigger a command in response to detecting the event notification, according to various aspects.
FIG. 15 and 16 illustrate exemplary user interfaces that a control device may display to configure triggering commands on a target device in response to event notifications broadcasted from a source device, according to various aspects.
FIG. 17 illustrates an exemplary communications device that may be used in connection with any of the various aspects and embodiments described herein.
FIG. 18 illustrates an exemplary connected home network environment in which any of the various aspects and embodiments described herein may be used.

### DETAILED DESCRIPTION

Various aspects and embodiments are disclosed in the following description and related drawings to show specific examples relating to exemplary aspects and embodiments. Alternate aspects and embodiments will be apparent to those skilled in the pertinent art upon reading this disclosure, and may be constructed and practiced without departing from the scope of the appended claims. Additionally, well-known elements will not be described in detail or may be omitted so as to not obscure the relevant details of the aspects and embodiments disclosed herein.

The word "exemplary" is used herein to mean "serving as an example, instance, or illustration." Any embodiment described herein as "exemplary" is not necessarily to be construed as preferred or advantageous over other embodiments. Likewise, the term "embodiments" does not require that all embodiments include the discussed feature, advantage or mode of operation.

The terminology used herein describes particular embodiments only and should be construed to limit any embodiments disclosed herein. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Further, many aspects are described in terms of sequences of actions to be performed by, for example, elements of a computing device. It will be recognized that various actions described herein can be performed by specific circuits (e.g., an application specific integrated circuit (ASIC)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects described herein may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the term "Internet of Things device" (or "IoT device") may refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

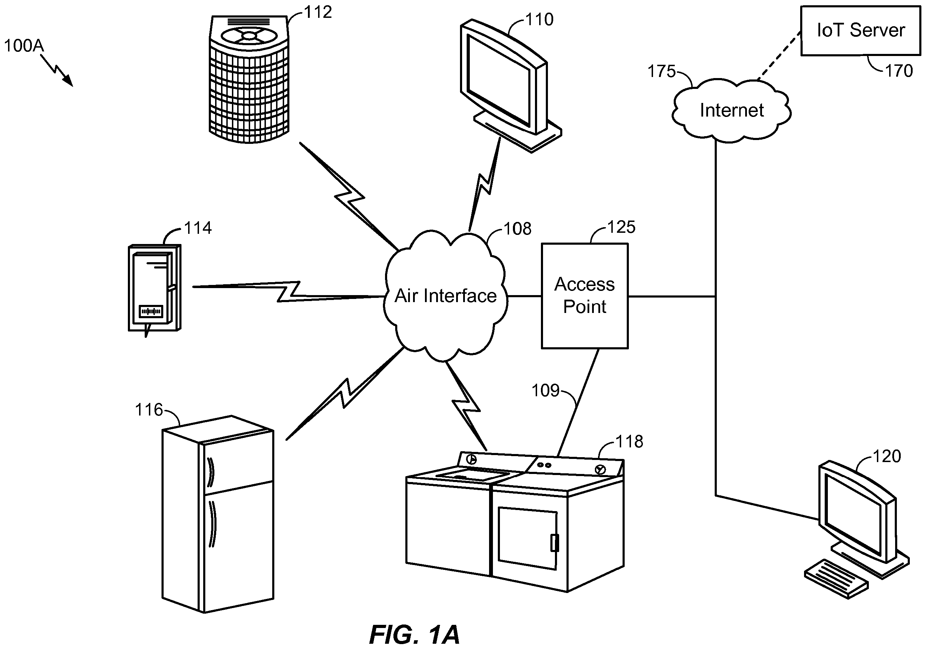

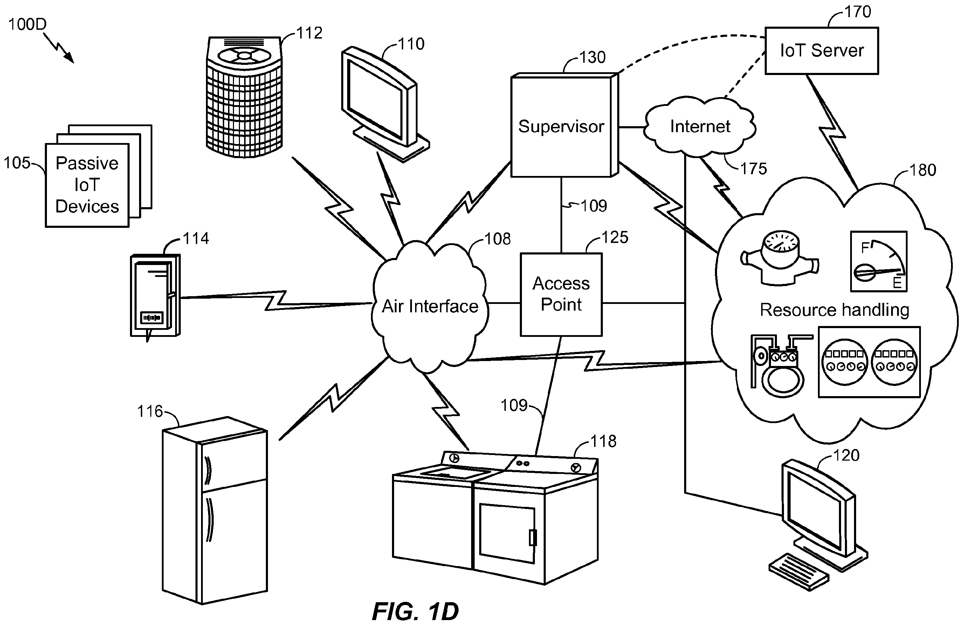

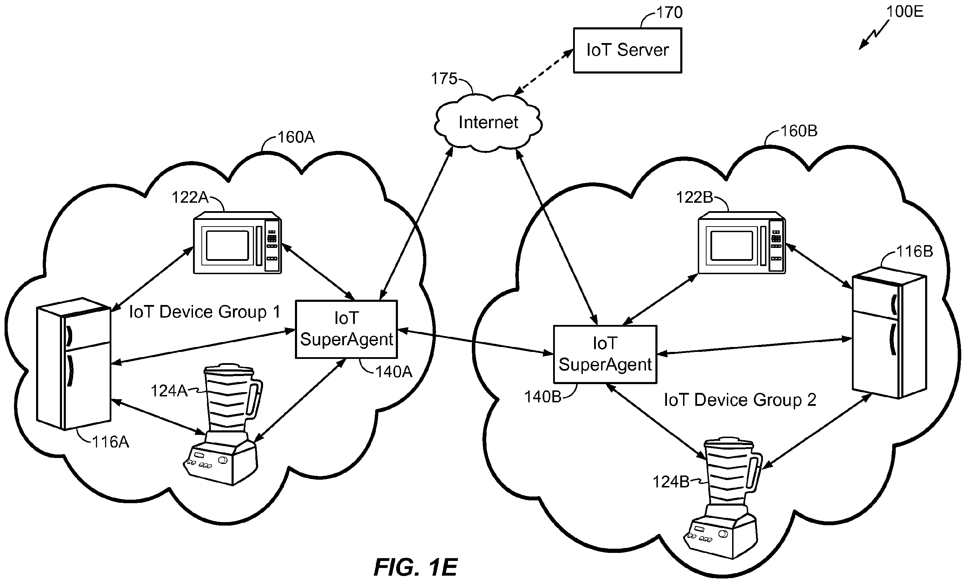

FIG. 1A illustrates a high-level system architecture of a wireless communications system 100A in accordance with various aspects. The wireless communications system 100A contains a plurality of IoT devices, which include a television 110, an outdoor air conditioning unit 112, a thermostat 114, a refrigerator 116, and a washer and dryer 118.

Referring to FIG. 1A, IoT devices 110-118 are configured to communicate with an access network (e.g., an access point 125) over a physical communications interface or layer, shown in FIG. 1A as air interface 108 and a direct wired connection 109. The air interface 108 can comply with a wireless Internet protocol (IP), such as IEEE 802.11. Although FIG. 1A illustrates IoT devices 110-118 communicating over the air interface 108 and IoT device 118 communicating over the direct wired connection 109, each IoT device may communicate over a wired or wireless connection, or both.

The Internet 175 includes a number of routing agents and processing agents (not shown in FIG. 1A for the sake of convenience). The Internet 175 is a global system of interconnected computers and computer networks that uses a standard Internet protocol suite (e.g., the Transmission Control Protocol (TCP) and IP) to communicate among disparate devices/networks. TCP/IP provides end-to-end connectivity specifying how data should be formatted, addressed, transmitted, routed and received at the destination.

In FIG. 1A, a computer 120, such as a desktop or personal computer (PC), is shown as connecting to the Internet 175 directly (e.g., over an Ethernet connection or Wi-Fi or 802.11-based network). The computer 120 may have a wired connection to the Internet 175, such as a direct connection to a modem or router, which, in an example, can correspond to the access point 125 itself (e.g., for a Wi-Fi router with both wired and wireless connectivity). Alternatively, rather than being connected to the access point 125 and the Internet 175 over a wired connection, the computer 120 may be connected to the access point 125 over air interface 108 or another wireless interface, and access the Internet 175 over the air interface 108. Although illustrated as a desktop computer, computer 120 may be a laptop computer, a tablet computer, a PDA, a smart phone, or the like. The computer 120 may be an IoT device and/or contain functionality to manage an IoT network/group, such as the network/group of IoT devices 110-118.

The access point 125 may be connected to the Internet 175 via, for example, an optical communication system, such as FiOS, a cable modem, a digital subscriber line (DSL) modem, or the like. The access point 125 may communicate with IoT devices 110-120 and the Internet 175 using the standard Internet protocols (e.g., TCP/IP).

Referring to FIG. 1A, an IoT server 170 is shown as connected to the Internet 175. The IoT server 170 can be implemented as a plurality of structurally separate servers, or alternately may correspond to a single server. In an aspect, the IoT server 170 is optional (as indicated by the dotted line), and the group of IoT devices 110-120 may be a peer-to-peer (P2P) network. In such a case, the IoT devices 110-120 can communicate with each other directly over the air interface 108 and/or the direct wired connection 109 using appropriate device-to-device (D2D) communication technology. Alternatively, or additionally, some or all of IoT devices 110-120 may be configured with a communication interface independent of air interface 108 and direct wired connection 109. For example, if the air interface 108 corresponds to a Wi-Fi interface, one or more of the IoT devices 110-120 may have Bluetooth or NFC interfaces for communicating directly with each other or other Bluetooth or NFC-enabled devices.

In a peer-to-peer network, service discovery schemes can multicast the presence of nodes, their capabilities, and group membership. The peer-to-peer devices can establish associations and subsequent interactions based on this information.

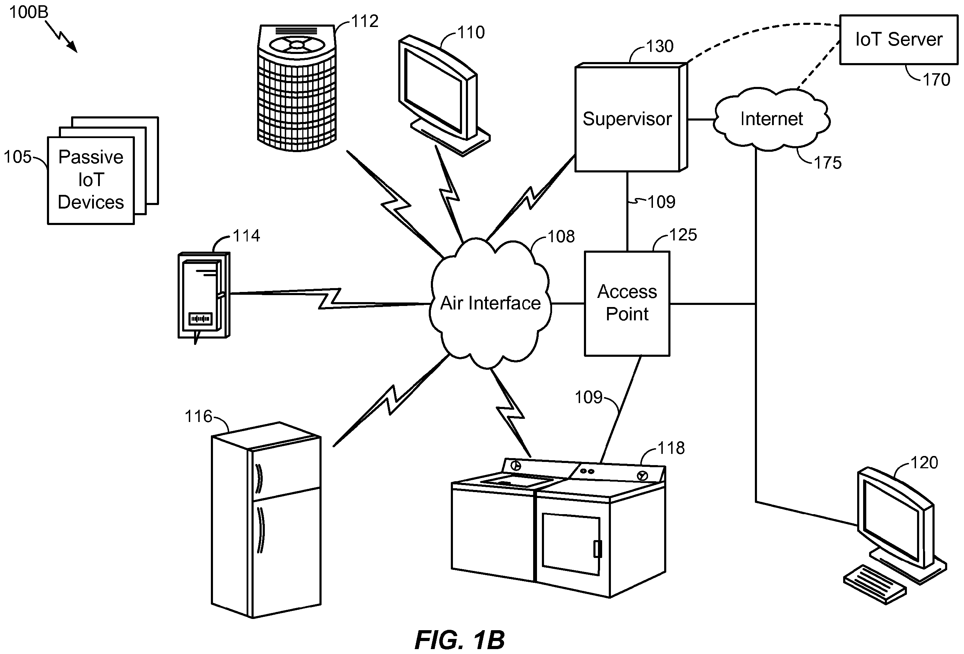

In accordance with various aspects, FIG. 1B illustrates a high-level architecture of another wireless communications system 100B that contains a plurality of IoT devices. In general, the wireless communications system 100B shown in FIG. 1B may include various components that are the same and/or substantially similar to the wireless communications system 100A shown in FIG. 1A, which was described in greater detail above (e.g., various IoT devices, including a television 110, outdoor air conditioning unit 112, thermostat 114, refrigerator 116, and washer and dryer 118, that are configured to communicate with an access point 125 over an air interface 108 and/or a direct wired connection 109, a computer 120 that directly connects to the Internet 175 and/or connects to the Internet 175 through access point 125, and an IoT server 170 accessible via the Internet 175, etc.). As such, for brevity and ease of description, various details relating to certain components in the wireless communications system 100B shown in FIG. 1B may be omitted herein to the extent that the same or similar details have already been provided above in relation to the wireless communications system 100A illustrated in FIG. 1A.

Referring to FIG. 1B, the wireless communications system 100B may include a supervisor device 130, which may alternatively be referred to as an IoT manager 130 or IoT manager device 130. As such, where the following description uses the term "supervisor device" 130, those skilled in the art will appreciate that any references to an IoT manager, group owner, or similar terminology may refer to the supervisor device 130 or another physical or logical component that provides the same or substantially similar functionality.

In various embodiments, the supervisor device 130 may generally observe, monitor, control, or otherwise manage the various other components in the wireless communications system 100B. For example, the supervisor device 130 can communicate with an access network (e.g., access point 125) over air interface 108 and/or a direct wired connection 109 to monitor or manage attributes, activities, or other states associated with the various IoT devices 110-120 in the wireless communications system 100B. The supervisor device 130 may have a wired or wireless connection to the Internet 175 and optionally to the IoT server 170 (shown as a dotted line). The supervisor device 130 may obtain information from the Internet 175 and/or the IoT server 170 that can be used to further monitor or manage attributes, activities, or other states associated with the various IoT devices 110-120. The supervisor device 130 may be a standalone device or one of IoT devices 110-120, such as computer 120. The supervisor device 130 may be a physical device or a software application running on a physical device. The supervisor device 130 may include a user interface that can output information relating to the monitored attributes, activities, or other states associated with the IoT devices 110-120 and receive input information to control or otherwise manage the attributes, activities, or other states associated therewith. Accordingly, the supervisor device 130 may generally include various components and support various wired and wireless communication interfaces to observe, monitor, control, or otherwise manage the various components in the wireless communications system 100B.

The wireless communications system 100B shown in FIG. 1B may include one or more passive IoT devices 105 (in contrast to the active IoT devices 110-120) that can be coupled to or otherwise made part of the wireless communications system 100B. In general, the passive IoT devices 105 may include barcoded devices, Bluetooth devices, radio frequency (RF) devices, RFID tagged devices, infrared (IR) devices, NFC tagged devices, or any other suitable device that can provide its identifier and attributes to another device when queried over a short range interface. Active IoT devices may detect, store, communicate, act on, and/or the like, changes in attributes of passive IoT devices.

For example, passive IoT devices 105 may include a coffee cup and a container of orange juice that each have an RFID tag or barcode. A cabinet IoT device and the refrigerator IoT device 116 may each have an appropriate scanner or reader that can read the RFID tag or barcode to detect when the coffee cup and/or the container of orange juice passive IoT devices 105 have been added or removed. In response to the cabinet IoT device detecting the removal of the coffee cup passive IoT device 105 and the refrigerator IoT device 116 detecting the removal of the container of orange juice passive IoT device, the supervisor device 130 may receive one or more signals that relate to the activities detected at the cabinet IoT device and the refrigerator IoT device 116. The supervisor device 130 may then infer that a user is drinking orange juice from the coffee cup and/or likes to drink orange juice from a coffee cup.

Although the foregoing describes the passive IoT devices 105 as having some form of RFID tag or barcode communication interface, the passive IoT devices 105 may include one or more devices or other physical objects that do not have such communication capabilities. For example, certain IoT devices may have appropriate scanner or reader mechanisms that can detect shapes, sizes, colors, and/or other observable features associated with the passive IoT devices 105 to identify the passive IoT devices 105. In this manner, any suitable physical object may communicate its identity and attributes and become part of the wireless communication system 100B and be observed, monitored, controlled, or otherwise managed with the supervisor device 130. Further, passive IoT devices 105 may be coupled to or otherwise made part of the wireless communications system 100A in FIG. 1A and observed, monitored, controlled, or otherwise managed in a substantially similar manner.

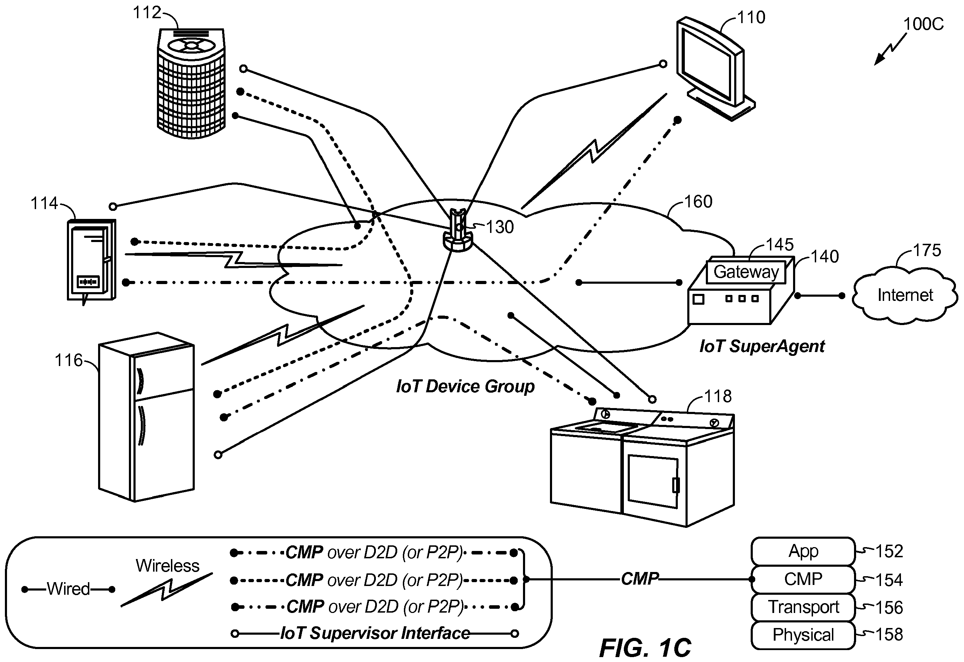

In accordance with various aspects, FIG. 1C illustrates a high-level architecture of another wireless communications system 100C that contains a plurality of IoT devices. In general, the wireless communications system 100C shown in FIG. 1C may include various components that are the same and/or substantially similar to the wireless communications systems 100A and 100B shown in FIGS. 1A and 1B, respectively, which were described in greater detail above. As such, for brevity and ease of description, various details relating to certain components in the wireless communications system 100C shown in FIG. 1C may be omitted herein to the extent that the same or similar details have already been provided above in relation to the wireless communications systems 100A and 100B illustrated in FIGS. 1A and 1B, respectively.

The communications system 100C shown in FIG. 1C illustrates exemplary peer-to-peer communications between the IoT devices 110-118 and the supervisor device 130. As shown in FIG. 1C, the supervisor device 130 communicates with each of the IoT devices 110-118 over an IoT supervisor interface. Further, IoT devices 110 and 114, IoT devices 112, 114, and 116, and IoT devices 116 and 118, communicate directly with each other.

The IoT devices 110-118 make up an IoT group 160. An IoT device group 160 is a group of locally connected IoT devices, such as the IoT devices connected to a user's home network. Although not shown, multiple IoT device groups may be connected to and/or communicate with each other via an IoT SuperAgent 140 connected to the Internet 175. At a high level, the supervisor device 130 manages intra-group communications, while the IoT SuperAgent 140 can manage inter-group communications. Although shown as separate devices, the supervisor device 130 and the IoT SuperAgent 140 may be, or reside on, the same device (e.g., a standalone device or an IoT device, such as computer 120 in FIG. 1A). Alternatively, the IoT SuperAgent 140 may correspond to or include the functionality of the access point 125. As yet another alternative, the IoT SuperAgent 140 may correspond to or include the functionality of an IoT server, such as IoT server 170. The IoT SuperAgent 140 may encapsulate gateway functionality 145.

Each IoT device 110-118 can treat the supervisor device 130 as a peer and transmit attribute/schema updates to the supervisor device 130. When an IoT device needs to communicate with another IoT device, it can request the pointer to that IoT device from the supervisor device 130 and then communicate with the target IoT device as a peer. The IoT devices 110-118 communicate with each other over a peer-to-peer communication network using a common messaging protocol (CMP). As long as two IoT devices are CMP-enabled and connected over a common communication transport, they can communicate with each other. In the protocol stack, the CMP layer 154 is below the application layer 152 and above the transport layer 156 and the physical layer 158.

In accordance with various aspects, FIG. ID illustrates a high-level architecture of another wireless communications system 100D that contains a plurality of IoT devices. In general, the wireless communications system 100D shown in FIG. ID may include various components that are the same and/or substantially similar to the wireless communications systems 100A-100C shown in FIGS. 1A-1C, respectively, which were described in greater detail above. As such, for brevity and ease of description, various details relating to certain components in the wireless communications system 100D shown in FIG. ID may be omitted herein to the extent that the same or similar details have already been provided above in relation to the wireless communications systems 100A-100C illustrated in FIGS. 1A-1C, respectively.

The Internet 175 is a "resource" that can be regulated using the concept of the IoT. However, the Internet 175 is just one example of a resource that is regulated, and any resource could be regulated using the concept of the IoT. Other resources that can be regulated include, but are not limited to, electricity, gas, storage, security, and the like. An IoT device may be connected to the resource and thereby regulate it, or the resource could be regulated over the Internet 175. FIG. ID illustrates several resources 180, such as natural gas, gasoline, hot water, and electricity, wherein the resources 180 can be regulated in addition to and/or over the Internet 175.

IoT devices can communicate with each other to regulate their use of a resource 180. For example, IoT devices such as a toaster, a computer, and a hairdryer may communicate with each other over a Bluetooth communication interface to regulate their use of electricity (the resource 180). As another example, IoT devices such as a desktop computer, a telephone, and a tablet computer may communicate over a Wi-Fi communication interface to regulate their access to the Internet 175 (the resource 180). As yet another example, IoT devices such as a stove, a clothes dryer, and a water heater may communicate over a Wi-Fi communication interface to regulate their use of gas. Alternatively, or additionally, each IoT device may be connected to an IoT server, such as IoT server 170, which has logic to regulate their use of the resource 180 based on information received from the IoT devices.

In accordance with various aspects, FIG. IE illustrates a high-level architecture of another wireless communications system 100E that contains a plurality of IoT devices. In general, the wireless communications system 100E shown in FIG. IE may include various components that are the same and/or substantially similar to the wireless communications systems 100A-100D shown in FIGS. 1A-1D, respectively, which were described in greater detail above. As such, for brevity and ease of description, various details relating to certain components in the wireless communications system 100E shown in FIG. IE may be omitted herein to the extent that the same or similar details have already been provided above in relation to the wireless communications systems 100A-100D illustrated in FIGS. 1A-1D, respectively.

The communications system 100E includes two IoT device groups 160A and 160B. Multiple IoT device groups may be connected to and/or communicate with each other via an IoT SuperAgent connected to the Internet 175. At a high level, an IoT SuperAgent may manage inter-group communications among IoT device groups. For example, in FIG. IE, the IoT device group 160A includes IoT devices 116A, 122A, and 124A and an IoT SuperAgent 140A, while IoT device group 160B includes IoT devices 116B, 122B, and 124B and an IoT SuperAgent 140B. As such, the IoT SuperAgents 140A and 140B may connect to the Internet 175 and communicate with each other over the Internet 175 and/or communicate with each other directly to facilitate communication between the IoT device groups 160A and 160B. Furthermore, although FIG. IE illustrates two IoT device groups 160A and 160B communicating with each other via IoT SuperAgents 140A and 140B, those skilled in the art will appreciate that any number of IoT device groups may suitably communicate with each other using IoT SuperAgents.

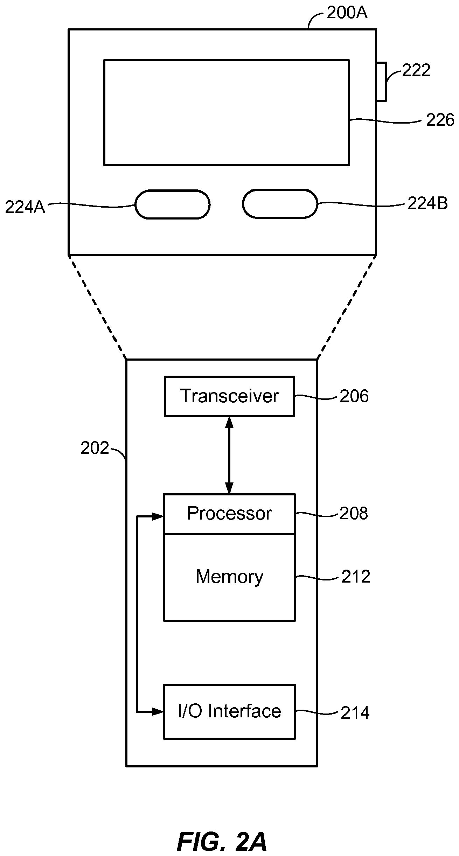

FIG. 2A illustrates a high-level example of an IoT device 200A in accordance with various aspects. While external appearances and/or internal components can differ significantly among IoT devices, most IoT devices will have some sort of user interface, which may comprise a display and a means for user input. IoT devices without a user interface can be communicated with remotely over a wired or wireless network, such as air interface 108 in FIGS. 1A-1B.

As shown in FIG. 2A, in an example configuration for the IoT device 200A, an external casing of IoT device 200A may be configured with a display 226, a power button 222, and two control buttons 224A and 224B, among other components, as is known in the art. The display 226 may be a touchscreen display, in which case the control buttons 224A and 224B may not be necessary. While not shown explicitly as part of IoT device 200A, the IoT device 200A may include one or more external antennas and/or one or more integrated antennas that are built into the external casing, including but not limited to Wi-Fi antennas, cellular antennas, satellite position system (SPS) antennas (e.g., global positioning system (GPS) antennas), and so on.

While internal components of IoT devices, such as IoT device 200A, can be embodied with different hardware configurations, a basic high-level configuration for internal hardware components is shown as platform 202 in FIG. 2A. The platform 202 can receive and execute software applications, data and/or commands transmitted over a network interface, such as air interface 108 in FIGS. 1A-B and/or a wired interface. The platform 202 can also independently execute locally stored applications. The platform 202 can include one or more transceivers 206 configured for wired and/or wireless communication (e.g., a Wi-Fi transceiver, a Bluetooth transceiver, a cellular transceiver, a satellite transceiver, a GPS or SPS receiver, etc.) operably coupled to one or more processors 208, such as a microcontroller, microprocessor, application specific integrated circuit, digital signal processor (DSP), programmable logic circuit, or other data processing device, which will be generally referred to as processor 208. The processor 208 can execute application programming instructions within a memory 212 of the IoT device. The memory 212 can include one or more of read-only memory (ROM), random-access memory (RAM), electrically erasable programmable ROM (EEPROM), flash cards, or any memory common to computer platforms. One or more input / output (I/O) interfaces 214 can be configured to allow the processor 208 to communicate with and control from various I/O devices such as the display 226, power button 222, control buttons 224A and 224B as illustrated, and any other devices, such as sensors, actuators, relays, valves, switches, and the like associated with the IoT device 200A.

Accordingly, various aspects can include an IoT device (e.g., IoT device 200A) including the ability to perform the functions described herein. As will be appreciated by those skilled in the art, the various logic elements can be embodied in discrete elements, software modules executed on a processor (e.g., processor 208) or any combination of software and hardware to achieve the functionality disclosed herein. For example, transceiver 206, processor 208, memory 212, and I/O interface 214 may all be used cooperatively to load, store and execute the various functions disclosed herein and thus the logic to perform these functions may be distributed over various elements. Alternatively, the functionality could be incorporated into one discrete component. Therefore, the features of the IoT device 200A in FIG. 2A are to be considered merely illustrative and the IoT device 200A is not limited to the illustrated features or arrangement shown in FIG. 2A.

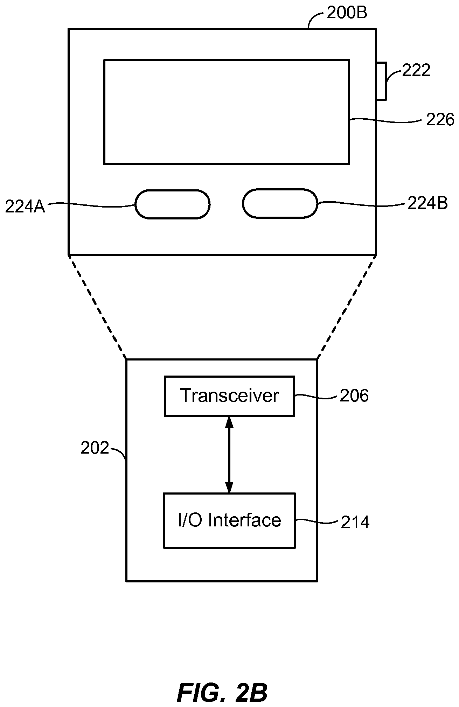

FIG. 2B illustrates a high-level example of a passive IoT device 200B in accordance with various aspects. In general, the passive IoT device 200B shown in FIG. 2B may include various components that are the same and/or substantially similar to the IoT device 200A shown in FIG. 2A, which was described in greater detail above. As such, for brevity and ease of description, various details relating to certain components in the passive IoT device 200B shown in FIG. 2B may be omitted herein to the extent that the same or similar details have already been provided above in relation to the IoT device 200A illustrated in FIG. 2A.

The passive IoT device 200B shown in FIG. 2B may generally differ from the IoT device 200A shown in FIG. 2A in that the passive IoT device 200B may not have a processor, internal memory, or certain other components. Instead, in various embodiments, the passive IoT device 200B may only include an I/O interface 214 or other suitable mechanism that allows the passive IoT device 200B to be observed, monitored, controlled, managed, or otherwise known within a controlled IoT network. For example, in various embodiments, the I/O interface 214 associated with the passive IoT device 200B may include a barcode, Bluetooth interface, radio frequency (RF) interface, RFID tag, IR interface, NFC interface, or any other suitable I/O interface that can provide an identifier and attributes associated with the passive IoT device 200B to another device when queried over a short range interface (e.g., an active IoT device, such as IoT device 200A, that can detect, store, communicate, act on, or otherwise process information relating to the attributes associated with the passive IoT device 200B).

Although the foregoing describes the passive IoT device 200B as having some form of RF, barcode, or other I/O interface 214, the passive IoT device 200B may comprise a device or other physical object that does not have such an I/O interface 214. For example, certain IoT devices may have appropriate scanner or reader mechanisms that can detect shapes, sizes, colors, and/or other observable features associated with the passive IoT device 200B to identify the passive IoT device 200B. In this manner, any suitable physical object may communicate its identity and attributes and be observed, monitored, controlled, or otherwise managed within a controlled IoT network.

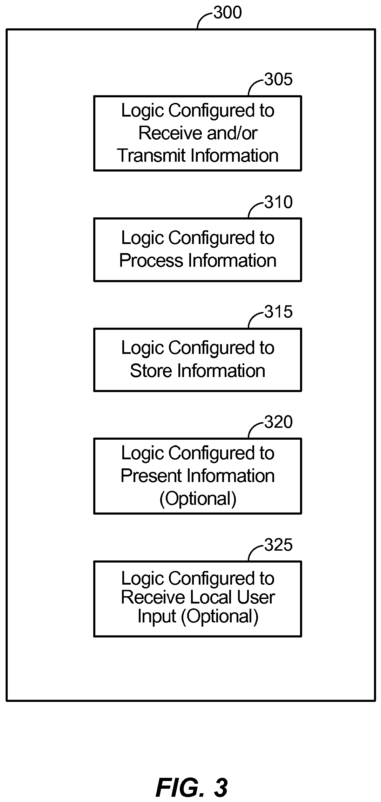

FIG. 3 illustrates a communication device 300 that includes logic configured to perform functionality. The communication device 300 can correspond to any of the above-noted communication devices, including but not limited to IoT devices 110-120, IoT device 200A, any components coupled to the Internet 175 (e.g., the IoT server 170), and so on. Thus, communication device 300 can correspond to any electronic device that is configured to communicate with (or facilitate communication with) one or more other entities over the wireless communications systems 100A-B of FIGS. 1A-B.

Referring to FIG. 3, the communication device 300 includes logic configured to receive and/or transmit information 305. In an example, if the communication device 300 corresponds to a wireless communications device (e.g., IoT device 200A and/or passive IoT device 200B), the logic configured to receive and/or transmit information 305 can include a wireless communications interface (e.g., Bluetooth, Wi-Fi, Wi-Fi Direct, Long-Term Evolution (LTE) Direct, etc.) such as a wireless transceiver and associated hardware (e.g., an RF antenna, a MODEM, a modulator and/or demodulator, etc.). In another example, the logic configured to receive and/or transmit information 305 can correspond to a wired communications interface (e.g., a serial connection, a USB or Firewire connection, an Ethernet connection through which the Internet 175 can be accessed, etc.). Thus, if the communication device 300 corresponds to some type of network-based server (e.g., the application 170), the logic configured to receive and/or transmit information 305 can correspond to an Ethernet card, in an example, that connects the network-based server to other communication entities via an Ethernet protocol. In a further example, the logic configured to receive and/or transmit information 305 can include sensory or measurement hardware by which the communication device 300 can monitor its local environment (e.g., an accelerometer, a temperature sensor, a light sensor, an antenna for monitoring local RF signals, etc.). The logic configured to receive and/or transmit information 305 can also include software that, when executed, permits the associated hardware of the logic configured to receive and/or transmit information 305 to perform its reception and/or transmission function(s). However, the logic configured to receive and/or transmit information 305 does not correspond to software alone, and the logic configured to receive and/or transmit information 305 relies at least in part upon hardware to achieve its functionality.

Referring to FIG. 3, the communication device 300 further includes logic configured to process information 310. In an example, the logic configured to process information 310 can include at least a processor. Example implementations of the type of processing that can be performed by the logic configured to process information 310 includes but is not limited to performing determinations, establishing connections, making selections between different information options, performing evaluations related to data, interacting with sensors coupled to the communication device 300 to perform measurement operations, converting information from one format to another (e.g., between different protocols such as .wmv to .avi, etc.), and so on. For example, the processor included in the logic configured to process information 310 can correspond to a general purpose processor, a DSP, an ASIC, a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration). The logic configured to process information 310 can also include software that, when executed, permits the associated hardware of the logic configured to process information 310 to perform its processing function(s). However, the logic configured to process information 310 does not correspond to software alone, and the logic configured to process information 310 relies at least in part upon hardware to achieve its functionality.

Referring to FIG. 3, the communication device 300 further includes logic configured to store information 315. In an example, the logic configured to store information 315 can include at least a non-transitory memory and associated hardware (e.g., a memory controller, etc.). For example, the non-transitory memory included in the logic configured to store information 315 can correspond to RAM, flash memory, ROM, erasable programmable ROM (EPROM), EEPROM, registers, hard disk, a removable disk, a CD-ROM, or any other form of storage medium known in the art. The logic configured to store information 315 can also include software that, when executed, permits the associated hardware of the logic configured to store information 315 to perform its storage function(s). However, the logic configured to store information 315 does not correspond to software alone, and the logic configured to store information 315 relies at least in part upon hardware to achieve its functionality.

Referring to FIG. 3, the communication device 300 further optionally includes logic configured to present information 320. In an example, the logic configured to present information 320 can include at least an output device and associated hardware. For example, the output device can include a video output device (e.g., a display screen, a port that can carry video information such as USB, HDMI, etc.), an audio output device (e.g., speakers, a port that can carry audio information such as a microphone jack, USB, HDMI, etc.), a vibration device and/or any other device by which information can be formatted for output or actually outputted by a user or operator of the communication device 300. For example, if the communication device 300 corresponds to the IoT device 200A as shown in FIG. 2A and/or the passive IoT device 200B as shown in FIG. 2B, the logic configured to present information 320 can include the display 226. In a further example, the logic configured to present information 320 can be omitted for certain communication devices, such as network communication devices that do not have a local user (e.g., network switches or routers, remote servers, etc.). The logic configured to present information 320 can also include software that, when executed, permits the associated hardware of the logic configured to present information 320 to perform its presentation function(s). However, the logic configured to present information 320 does not correspond to software alone, and the logic configured to present information 320 relies at least in part upon hardware to achieve its functionality.

Referring to FIG. 3, the communication device 300 further optionally includes logic configured to receive local user input 325. In an example, the logic configured to receive local user input 325 can include at least a user input device and associated hardware. For example, the user input device can include buttons, a touchscreen display, a keyboard, a camera, an audio input device (e.g., a microphone or a port that can carry audio information such as a microphone jack, etc.), and/or any other device by which information can be received from a user or operator of the communication device 300. For example, if the communication device 300 corresponds to the IoT device 200A as shown in FIG. 2A and/or the passive IoT device 200B as shown in FIG. 2B, the logic configured to receive local user input 325 can include the buttons 222, 224A, and 224B, the display 226 (if a touchscreen), etc. In a further example, the logic configured to receive local user input 325 can be omitted for certain communication devices, such as network communication devices that do not have a local user (e.g., network switches or routers, remote servers, etc.). The logic configured to receive local user input 325 can also include software that, when executed, permits the associated hardware of the logic configured to receive local user input 325 to perform its input reception function(s). However, the logic configured to receive local user input 325 does not correspond to software alone, and the logic configured to receive local user input 325 relies at least in part upon hardware to achieve its functionality.

Referring to FIG. 3, while the configured logics of 305 through 325 are shown as separate or distinct blocks in FIG. 3, it will be appreciated that the hardware and/or software by which the respective configured logic performs its functionality can overlap in part. For example, any software used to facilitate the functionality of the configured logics of 305 through 325 can be stored in the non-transitory memory associated with the logic configured to store information 315, such that the configured logics of 305 through 325 each performs their functionality (i.e., in this case, software execution) based in part upon the operation of software stored by the logic configured to store information 315. Likewise, hardware that is directly associated with one of the configured logics can be borrowed or used by other configured logics from time to time. For example, the processor of the logic configured to process information 310 can format data into an appropriate format before being transmitted by the logic configured to receive and/or transmit information 305, such that the logic configured to receive and/or transmit information 305 performs its functionality (i.e., in this case, transmission of data) based in part upon the operation of hardware (i.e., the processor) associated with the logic configured to process information 310.

Generally, unless stated otherwise explicitly, the phrase "logic configured to" as used herein is intended to refer to logic at least partially implemented with hardware, and is not intended to map to software-only implementations that are independent of hardware. Also, it will be appreciated that the configured logic or "logic configured to" in the various blocks are not limited to specific logic gates or elements, but generally refer to the ability to perform the functionality described herein (either via hardware or a combination of hardware and software). Thus, the configured logics or "logic configured to" as illustrated in the various blocks are not necessarily implemented as logic gates or logic elements despite sharing the word "logic." Other interactions or cooperation between the logic in the various blocks will become clear to one of ordinary skill in the art from a review of the aspects described below in more detail.

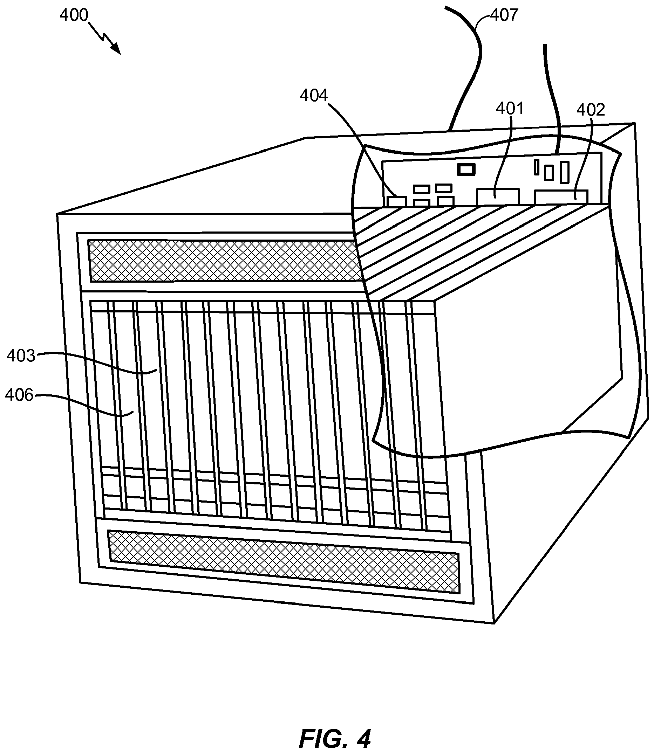

The various embodiments may be implemented on any of a variety of commercially available server devices, such as server 400 illustrated in FIG. 4. In an example, the server 400 may correspond to one example configuration of the IoT server 170 described above. In FIG. 4, the server 400 includes a processor 401 coupled to volatile memory 402 and a large capacity nonvolatile memory, such as a disk drive 403. The server 400 may also include a floppy disc drive, compact disc (CD) or DVD disc drive 406 coupled to the processor 401. The server 400 may also include network access ports 404 coupled to the processor 401 for establishing data connections with a network 407, such as a local area network coupled to other broadcast system computers and servers or to the Internet. In context with FIG. 3, it will be appreciated that the server 400 of FIG. 4 illustrates one example implementation of the communication device 300, whereby the logic configured to transmit and/or receive information 305 corresponds to the network access points 404 used by the server 400 to communicate with the network 407, the logic configured to process information 310 corresponds to the processor 401, and the logic configuration to store information 315 corresponds to any combination of the volatile memory 402, the disk drive 403 and/or the disc drive 406. The optional logic configured to present information 320 and the optional logic configured to receive local user input 325 are not shown explicitly in FIG. 4 and may or may not be included therein. Thus, FIG. 4 helps to demonstrate that the communication device 300 may be implemented as a server, in addition to an IoT device implementation as in FIG. 2A.

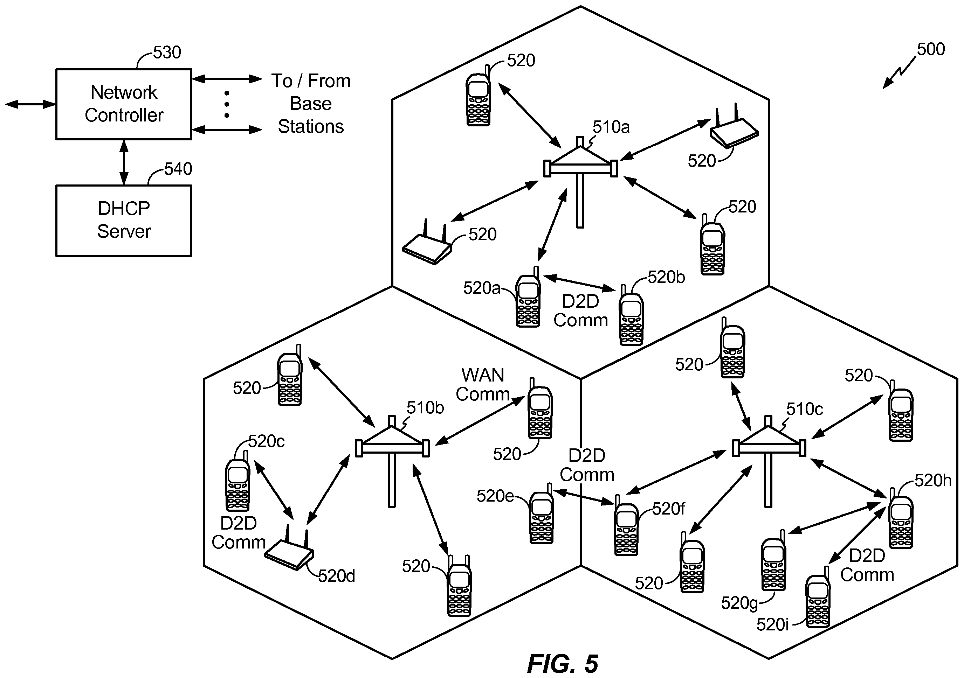

In general, as noted above, IP based technologies and services have become more mature, driving down the cost and increasing availability of IP, which has allowed Internet connectivity to be added to more and more types of everyday electronic objects. As such, the IoT is based on the idea that everyday electronic objects, not just computers and computer networks, can be readable, recognizable, locatable, addressable, and controllable via the Internet. In general, with the development and increasing prevalence of the IoT, numerous proximate heterogeneous IoT devices and other physical objects that have different types and perform different activities (e.g., lights, printers, refrigerators, air conditioners, etc.) may interact with one another in many different ways and be used in many different ways. As such, due to the potentially large number of heterogeneous IoT devices and other physical objects that may be in use within a controlled IoT network, well-defined and reliable communication interfaces are generally needed to connect the various heterogeneous IoT devices such that the various heterogeneous IoT devices can be appropriately configured, managed, and communicate with one another to exchange information, among other things. Accordingly, the following description provided in relation to FIGS. 5-8 generally outlines an exemplary communication framework that may support discoverable device-to-device (D2D) or peer-to-peer (P2P) services that can enable direct D2D communication among heterogeneous devices in a distributed programming environment as disclosed herein.

In general, user equipment (UE) (e.g., telephones, tablet computers, laptop and desktop computers, vehicles, etc.), can be configured to connect with one another locally (e.g., Bluetooth, local Wi-Fi, etc.), remotely (e.g., via cellular networks, through the Internet, etc.), or according to suitable combinations thereof. Furthermore, certain UEs may also support proximity-based D2D communication using certain wireless networking technologies (e.g., Wi-Fi, Bluetooth, Wi-Fi Direct, etc.) that support one-to-one connections or simultaneously connections to a group that includes several devices directly communicating with one another. To that end, FIG. 5 illustrates an exemplary wireless communication network or WAN 500 that may support discoverable D2D services that can enable direct D2D communication, wherein the wireless communication network 500 may comprise an LTE network or another suitable WAN that includes various base stations 510 and other network entities. For simplicity, only three base stations 510a, 510b and 510c, one network controller 530, and one Dynamic Host Configuration Protocol (DHCP) server 540 are shown in FIG. 5. A base station 510 may be an entity that communicates with devices 520 and may also be referred to as a Node B, an evolved Node B (eNB), an access point, etc. Each base station 510 may provide communication coverage for a particular geographic area and may support communication for the devices 520 located within the coverage area. To improve network capacity, the overall coverage area of a base station 510 may be partitioned into multiple (e.g., three) smaller areas, wherein each smaller area may be served by a respective base station 510. In 3GPP, the term "cell" can refer to a coverage area of a base station 510 and/or a base station subsystem 510 serving this coverage area, depending on the context in which the term is used. In 3GPP2, the term "sector" or "cell-sector" can refer to a coverage area of a base station 510 and/or a base station subsystem 510 serving this coverage area. For clarity, the 3GPP concept of "cell" may be used in the description herein.

A base station 510 may provide communication coverage for a macro cell, a pico cell, a femto cell, and/or other cell types. A macro cell may cover a relatively large geographic area (e.g., several kilometers in radius) and may allow unrestricted access by devices 520 with service subscription. A pico cell may cover a relatively small geographic area and may allow unrestricted access by devices 520 with service subscription. A femto cell may cover a relatively small geographic area (e.g., a home) and may allow restricted access by devices 520 having association with the femto cell (e.g., devices 520 in a Closed Subscriber Group (CSG)). In the example shown in FIG. 5, wireless network 500 includes macro base stations 510a, 510b and 510c for macro cells. Wireless network 500 may also include pico base stations 510 for pico cells and/or home base stations 510 for femto cells (not shown in FIG. 5).

Network controller 530 may couple to a set of base stations 510 and may provide coordination and control for these base stations 510. Network controller 530 may be a single network entity or a collection of network entities that can communicate with the base stations via a backhaul. The base stations may also communicate with one another (e.g., directly or indirectly via wireless or wireline backhaul). DHCP server 540 may support D2D communication, as described below. DHCP server 540 may be part of wireless network 500, external to wireless network 500, run via Internet Connection Sharing (ICS), or any suitable combination thereof. DHCP server 540 may be a separate entity (e.g., as shown in FIG. 5) or may be part of a base station 510, network controller 530, or some other entity. In any case, DHCP server 540 may be reachable by devices 520 desiring to communicate directly.

Devices 520 may be dispersed throughout wireless network 500, and each device 520 may be stationary or mobile. A device 520 may also be referred to as a node, user equipment (UE), a station, a mobile station, a terminal, an access terminal, a subscriber unit, etc. A device 520 may be a cellular phone, a personal digital assistant (PDA), a wireless modem, a wireless communication device, a handheld device, a laptop computer, a cordless phone, a wireless local loop (WLL) station, a smart phone, a netbook, a smartbook, a tablet, etc. A device 520 may communicate with base stations 510 in the wireless network 500 and may further communicate peer-to-peer with other devices 520. For example, as shown in FIG. 5, devices 520a and 520b may communicate peer-to-peer, devices 520c and 520d may communicate peer-to-peer, devices 520e and 520f may communicate peer-to-peer, and devices 520g, 520h, and 520i may communicate peer-to-peer, while remaining devices 520 may communicate with base stations 510. As further shown in FIG. 5, devices 520a, 520d, 520f, and 520h may also communicate with base stations 500 (e.g., when not engaged in D2D communication, or possibly concurrent with D2D communication).

In the description herein, WAN communication may refer to communication between a device 520 and a base station 510 in wireless network 500 (e.g., for a call with a remote entity such as another device 520). A WAN device is a device 520 that is interested or engaged in WAN communication. In general, the terms "peer-to-peer" or "P2P" communication and "device-to-device" or "D2D" communication as used herein refers to direct communication between two or more devices 520, without going through any base station 510. For simplicity, the description provided herein uses the term "device-to-device" or "D2D" to refer to such direct communication, although those skilled in the art will appreciate that the terms "peer-to-peer," "P2P," "device-to-device," and "D2D" may be interchangeable in the various aspects and embodiments described herein.

According to various embodiments, a D2D device is a device 520 that is interested or engaged in D2D communication (e.g., a device 520 that has traffic data for another device 520 within proximity of the D2D device). Two devices may be considered to be within proximity of one another, for example, if each device 520 can detect the other device 520. In general, a device 520 may communicate with another device 520 either directly for D2D communication or via at least one base station 510 for WAN communication.

In various embodiments, direct communication between D2D devices 520 may be organized into D2D groups. More particularly, a D2D group generally refers to a group of two or more devices 520 interested or engaged in D2D communication and a D2D link refers to a communication link for a D2D group. Furthermore, in various embodiments, a D2D group may include one device 520 designated a D2D group owner (or a D2D server) and one or more devices 520 designated D2D clients that are served by the D2D group owner. The D2D group owner may perform certain management functions such as exchanging signaling with a WAN, coordinating data transmission between the D2D group owner and D2D clients, etc. For example, as shown in FIG. 5, a first D2D group includes devices 520a and 520b under the coverage of base station 510a, a second D2D group includes devices 520c and 520d under the coverage of base station 510b, a third D2D group includes devices 520e and 520f under the coverage of different base stations 510b and 510c, and a fourth D2D group includes devices 520g, 520h and 520i under the coverage of base station 510c. Devices 520a, 520d, 520f, and 520h may be D2D group owners for their respective D2D groups and devices 520b, 520c, 520e, 520g, and 520i may be D2D clients in their respective D2D groups. The other devices 520 in FIG. 5 may be engaged in WAN communication.

In various embodiments, D2D communication may occur only within a D2D group and may further occur only between the D2D group owner and the D2D clients associated therewith. For example, if two D2D clients within the same D2D group (e.g., devices 520g and 520i) desire to exchange information, one of the D2D clients may send the information to the D2D group owner (e.g., device 520h) and the D2D group owner may then relay transmissions to the other D2D client. In various embodiments, a particular device 520 may belong to multiple D2D groups and may behave as either a D2D group owner or a D2D client in each D2D group. Furthermore, in various embodiments, a particular D2D client may belong to only one D2D group or belong to multiple D2D group and communicate with D2D devices 520 in any of the multiple D2D groups at any particular moment. In general, communication may be facilitated via transmissions on the downlink and uplink. For WAN communication, the downlink (or forward link) refers to the communication link from base stations 510 to devices 520, and the uplink (or reverse link) refers to the communication link from devices 520 to base stations 510. For D2D communication, the D2D downlink refers to the communication link from D2D group owners to D2D clients and the D2D uplink refers to the communication link from D2D clients to D2D group owners. In various embodiments, rather than using WAN technologies to communicate D2D, two or more devices may form smaller D2D groups and communicate D2D on a wireless local area network (WLAN) using technologies such as Wi-Fi, Bluetooth, or Wi-Fi Direct. For example, D2D communication using Wi-Fi, Bluetooth, Wi-Fi Direct, or other WLAN technologies may enable D2D communication between two or more mobile phones, game consoles, laptop computers, or other suitable communication entities.

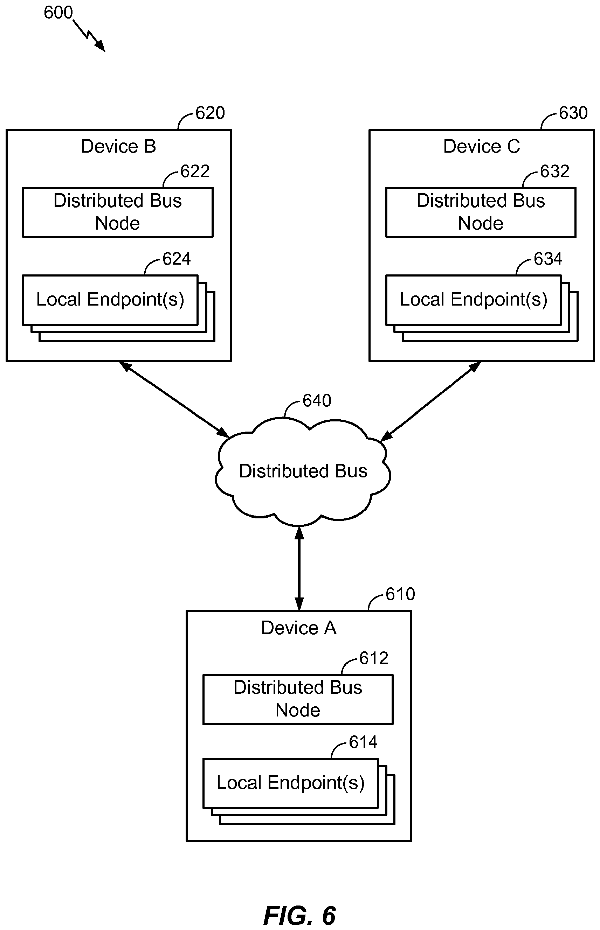

According to various aspects, FIG. 6 illustrates an exemplary environment 600 in which discoverable D2D services may be used to establish a proximity-based distributed bus 640 over which various devices 610, 620, 630 may communicate using D2D technology. For example, in various embodiments, communications between applications and the like, on a single platform may be facilitated using an interprocess communication protocol (IPC) framework over the distributed bus 640, which may comprise a software bus used to enable application-to-application communications in a networked computing environment where applications register with the distributed bus 640 to offer services to other applications and other applications query the distributed bus 640 for information about registered applications. Such a protocol may provide asynchronous notifications and remote procedure calls (RPCs) in which signal messages (e.g., notifications) may be point-to-point or broadcast, method call messages (e.g., RPCs) may be synchronous or asynchronous, and the distributed bus 640 may handle message routing between the various devices 610, 620, 630 (e.g., via one or more bus routers or "daemons" or other suitable processes that may provide attachments to the distributed bus 640).

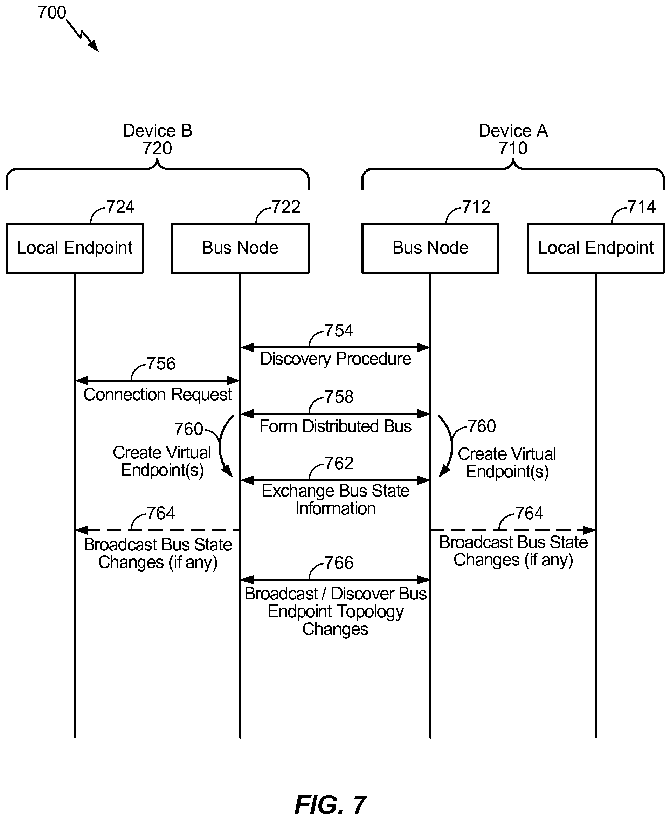

In various embodiments, the distributed bus 640 may be supported by a variety of transport protocols (e.g., Bluetooth, TCP/IP, Wi-Fi, CDMA, GPRS, UMTS, etc.). For example, according to various aspects, a first device 610 may include a distributed bus node 612 and one or more local endpoints 614, wherein the distributed bus node 612 may facilitate communications between local endpoints 614 associated with the first device 610 and local endpoints 624 and 634 associated with a second device 620 and a third device 630 through the distributed bus 640 (e.g., via distributed bus nodes 622 and 632 on the second device 620 and the third device 630). As will be described in further detail below with reference to FIG. 7, the distributed bus 640 may support symmetric multi-device network topologies and may provide a robust operation in the presence of device drops-outs. As such, the virtual distributed bus 640, which may generally be independent from any underlying transport protocol (e.g., Bluetooth, TCP/IP, Wi-Fi, etc.) may allow various security options, from unsecured (e.g., open) to secured (e.g., authenticated and encrypted), wherein the security options can be used while facilitating spontaneous connections among the first device 610, the second device 620, and the third device 630 without intervention when the various devices 610, 620, 630 come into range or proximity to each other.

According to various aspects, FIG. 7 illustrates an exemplary signaling flow 700 in which discoverable D2D services may be used to establish a proximity-based distributed bus over which a first device ("Device A") 710 and a second device ("Device B") 720 may communicate using D2D technology. For example, in the signaling flow 700 shown in FIG. 7, Device A 710 may request to communicate with Device B 720, wherein Device A 710 may a include local endpoint 714 (e.g., a local application, service, etc.), which may make a request to communicate in addition to a bus node 712 that may assist in facilitating such communications. Further, Device B 720 may include a local endpoint 724 with which the local endpoint 714 may be attempting to communicate in addition to a bus node 722 that may assist in facilitating communications between the local endpoint 714 on the Device A 710 and the local endpoint 724 on Device B 720.

In various embodiments, the bus nodes 712 and 722 may perform a suitable discovery mechanism at 754. For example, mechanisms for discovering connections supported by Bluetooth, TCP/IP, UNIX, or the like may be used. At 756, the local endpoint 714 on Device A 710 may request to connect to an entity, service, endpoint etc., available through bus node 712. In various embodiments, the request may include a request-and-response process between local endpoint 714 and bus node 712. At 758, a distributed message bus may be formed to connect bus node 712 to bus node 722 and thereby establish a D2D connection between Device A 710 and Device B 720. In various embodiments, communications to form the distributed bus between the bus nodes 712 and 722 may be facilitated using a suitable proximity-based D2D protocol (e.g., the AllJoyn™ software framework designed to enable interoperability among connected products and software applications from different manufacturers to dynamically create proximal networks and facilitate proximal D2D communication). Alternatively, in various embodiments, a server (not shown) may facilitate the connection between the bus nodes 712 and 722. Furthermore, in various embodiments, a suitable authentication mechanism may be used prior to forming the connection between bus nodes 712 and 722 (e.g., SASL authentication in which a client may send an authentication command to initiate an authentication conversation). Still further, at 758, bus nodes 712 and 722 may exchange information about other available endpoints (e.g., local endpoints 634 on Device C 630 in FIG. 6). In such embodiments, each local endpoint that a bus node maintains may be advertised to other bus nodes, wherein the advertisement may include unique endpoint names, transport types, connection parameters, or other suitable information.

In various embodiments, at 760, bus node 712 and bus node 722 may use obtained information associated with the local endpoints 724 and 714, respectively, to create virtual endpoints that may represent the real obtained endpoints available through various bus nodes. In various embodiments, message routing on the bus node 712 may use real and virtual endpoints to deliver messages. Further, there may one local virtual endpoint for every endpoint that exists on remote devices (e.g., Device A 710). Still further, such virtual endpoints may multiplex and/or de-multiplex messages sent over the distributed bus (e.g., a connection between bus node 712 and bus node 722). In various embodiments, virtual endpoints may receive messages from the local bus node 712 or 722, just like real endpoints, and may forward messages over the distributed bus. As such, the virtual endpoints may forward messages to the local bus nodes 712 and 722 from the endpoint multiplexed distributed bus connection. Furthermore, in various embodiments, virtual endpoints that correspond to virtual endpoints on a remote device may be reconnected at any time to accommodate desired topologies of specific transport types. In such embodiments, UNIX based virtual endpoints may be considered local and as such may not be considered candidates for reconnection. Further, TCP-based virtual endpoints may be optimized for one hop routing (e.g., each bus node 712 and 722 may be directly connected to each other). Still further, Bluetooth-based virtual endpoints may be optimized for a single pico-net (e.g., one master and n slaves) in which the Bluetooth-based master may be the same bus node as a local master node.

In various embodiments, the bus node 712 and the bus node 722 may exchange bus state information at 762 to merge bus instances and enable communication over the distributed bus. For example, in various embodiments, the bus state information may include a well-known to unique endpoint name mapping, matching rules, routing group, or other suitable information. In various embodiments, the state information may be communicated between the bus node 712 and the bus node 722 instances using an interface with local endpoints 714 and 724 communicating with using a distributed bus based local name. In another aspect, bus node 712 and bus node 722 may each may maintain a local bus controller responsible for providing feedback to the distributed bus, wherein the bus controller may translate global methods, arguments, signals, and other information into the standards associated with the distributed bus. The bus node 712 and the bus node 722 may communicate (e.g., broadcast) signals at 764 to inform the respective local endpoints 714 and 724 about any changes introduced during bus node connections, such as described above. In various embodiments, new and/or removed global and/or translated names may be indicated with name owner changed signals. Furthermore, global names that may be lost locally (e.g., due to name collisions) may be indicated with name lost signals. Still further, global names that are transferred due to name collisions may be indicated with name owner changed signals and unique names that disappear if and/or when the bus node 712 and the bus node 722 become disconnected may be indicated with name owner changed signals.

As used above, well-known names may be used to uniquely describe local endpoints 714 and 724. In various embodiments, when communications occur between Device A 710 and Device B 720, different well-known name types may be used. For example, a device local name may exist only on the bus node 712 associated with Device A 710 to which the bus node 712 directly attaches. In another example, a global name may exist on all known bus nodes 712 and 722, where only one owner of the name may exist on all bus segments. In other words, when the bus node 712 and bus node 722 are joined and any collisions occur, one of the owners may lose the global name. In still another example, a translated name may be used when a client is connected to other bus nodes associated with a virtual bus. In such embodiments, the translated name may include an appended end (e.g., a local endpoint 714 with well-known name "org.foo" connected to the distributed bus with Globally Unique Identifier "1234" may be seen as "G1234.org.foo").

In various embodiments, the bus node 712 and the bus node 722 may communicate (e.g., broadcast) signals at 766 to inform other bus nodes of changes to endpoint bus topologies. Thereafter, traffic from local endpoint 714 may move through virtual endpoints to reach intended local endpoint 724 on Device B 720. Further, in operation, communications between local endpoint 714 and local endpoint 724 may use routing groups. In various embodiments, routing groups may enable endpoints to receive signals, method calls, or other suitable information from a subset of endpoints. As such, a routing name may be determined by an application connected to a bus node 712 or 722. For example, a D2D application may use a unique, well-known routing group name built into the application. Further, bus nodes 712 and 722 may support registering and/or de-registering of local endpoints 714 and 724 with routing groups. In various embodiments, routing groups may have no persistence beyond a current bus instance. In another aspect, applications may register for their preferred routing groups each time they connect to the distributed bus. Still further, groups may be open (e.g., any endpoint can join) or closed (e.g., only the creator of the group can modify the group). Yet further, a bus node 712 or 722 may send signals to notify other remote bus nodes or additions, removals, or other changes to routing group endpoints. In such embodiments, the bus node 712 or 722 may send a routing group change signal to other group members whenever a member is added and/or removed from the group. Further, the bus node 712 or 722 may send a routing group change signal to endpoints that disconnect from the distributed bus without first removing themselves from the routing group.

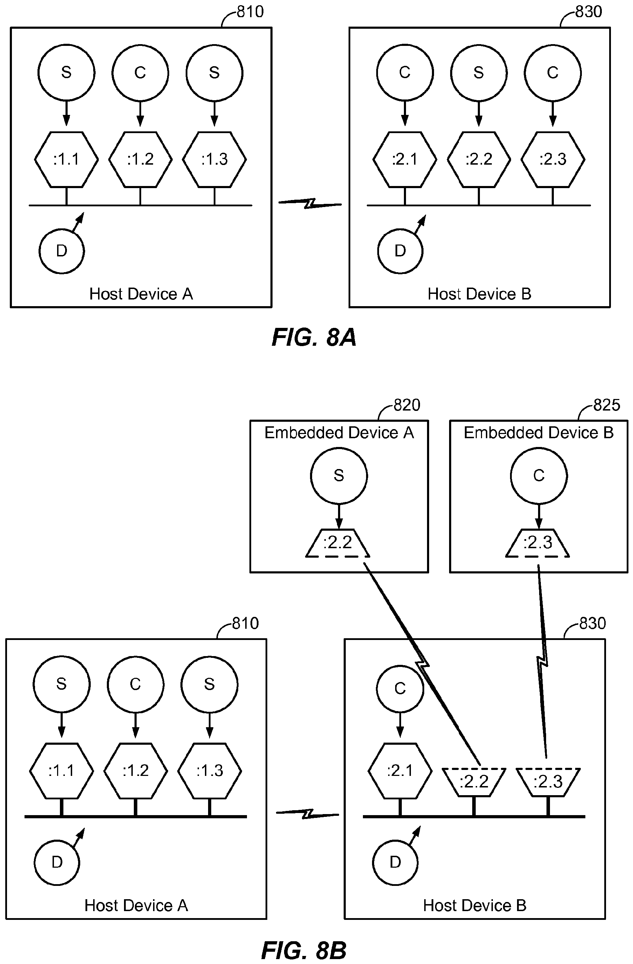

According to various aspects, FIG. 8A illustrates an exemplary proximity-based distributed bus that may be formed between a first host device 810 and a second host device 830 to enable D2D communication between the first host device 810 and the second host device 830. More particularly, as described above with respect to FIG. 6, the basic structure of the proximity-based distributed bus may comprise multiple bus segments that reside on separate physical host devices. Accordingly, in FIG. 8A, each segment of the proximity-based distributed bus may be located on one of the host devices 810, 830, wherein the host devices 810, 830 each execute a local bus router (or "daemon") that may implement the bus segments located on the respective host device 810, 830. For example, in FIG. 8A, each host device 810, 830 includes a bubble labeled "D" to represent the bus router that implements the bus segments located on the respective host device 810, 830. Furthermore, one or more of the host devices 810, 830 may have several bus attachments, where each bus attachment connects to the local bus router. For example, in FIG. 8A, the bus attachments on host devices 810, 830 are illustrated as hexagons that each correspond to either a service (S) or a client (C) that may request a service.

However, in certain cases, embedded devices may lack sufficient resources to run a local bus router. Accordingly, FIG. 8B illustrates an exemplary proximity-based distributed bus in which one or more embedded devices 820, 825 can connect to a host device (e.g., host device 830) to connect to the proximity-based distributed bus and thereby engage in D2D communication (e.g., with the host device 830 or with other host devices 810 and/or embedded devices 825 that are attached to the proximity-based distributed bus via the host device 830). As such, the embedded devices 820, 825 may generally "borrow" the bus router running on the host device 830, whereby FIG. 8B shows an arrangement where the embedded devices 820, 825 are physically separate from the host device 830 running the borrowed bus router that manages the distributed bus segment on which the embedded devices 820, 825 reside. In general, the connection between the embedded devices 820, 825 and the host device 830 may be made according to the Transmission Control Protocol (TCP) and the network traffic flowing between the embedded devices 820, 825 and the host device 830 may comprise messages that implement bus methods, bus signals, and properties flowing over respective sessions in a similar manner to that described in further detail above with respect to FIGS. 6 and 7.

More particularly, the embedded devices 820, 825 may connect to the host device 830 according to a discovery and connection process that may be conceptually similar to the discovery and connection process between clients and services, wherein the host device 830 may advertise a well-known name (e.g., "org.alljoyn.BusNode") that signals an ability or willingness to host the embedded devices 820, 825. In one use case, the embedded devices 820, 825 may simply connect to the "first" host device that advertises the well-known name. However, if the embedded devices 820, 825 simply connect to the first host device that advertises the well-known name, the embedded devices 820, 825 may not have any knowledge about the type associated with the host device (e.g., whether the host device 830 is a mobile device, a set-top box, an access point, etc.), nor would the embedded devices 820, 825 have any knowledge about the load status on the host device. Accordingly, in other use cases, the embedded devices 820, 825 may adaptively connect to the host device 830 based on information that the host devices 810, 830 provide when advertising the ability or willingness to host other devices (e.g., embedded devices 820, 825), which may thereby join the proximity-based distributed bus according to properties associated with the host devices 810, 830 (e.g., type, load status, etc.) and/or requirements associated with the embedded devices 820, 825 (e.g., a ranking table that expresses a preference to connect to a host device from the same manufacturer).

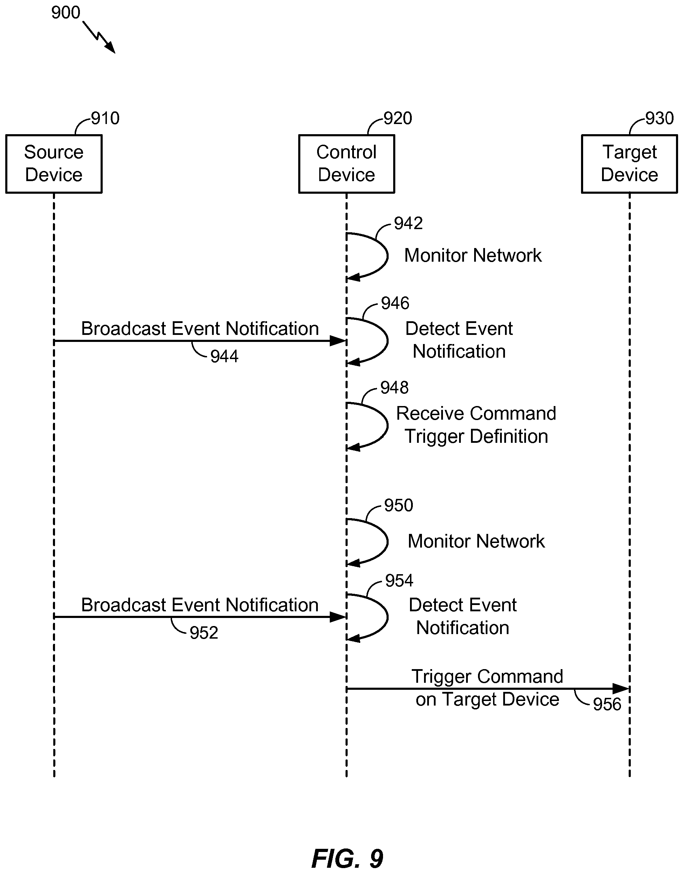

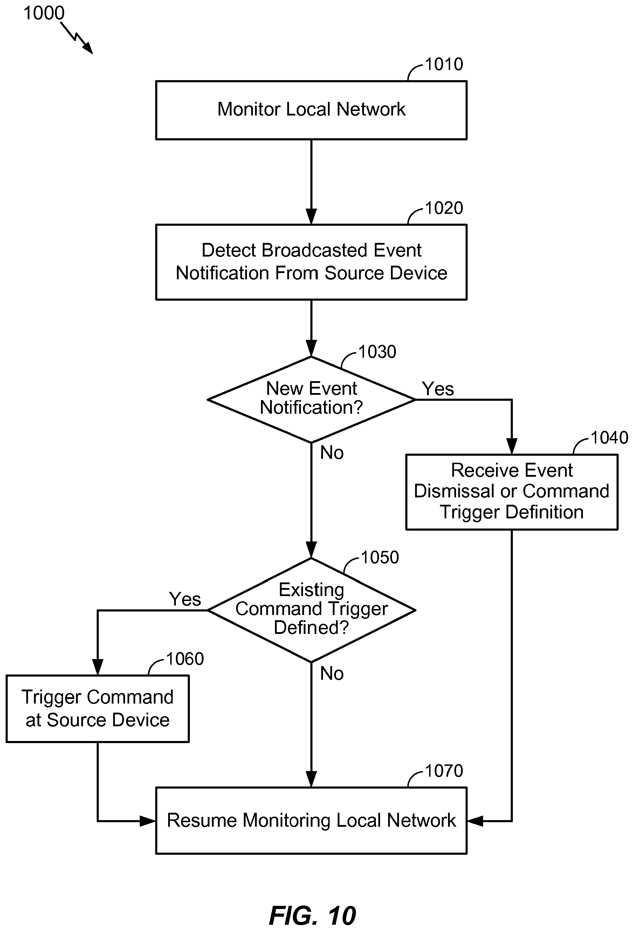

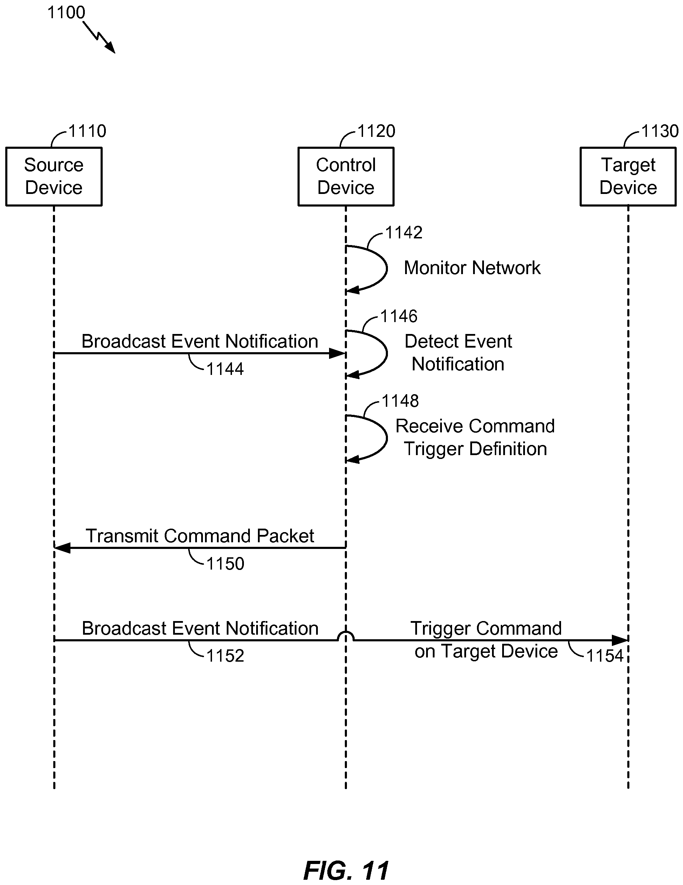

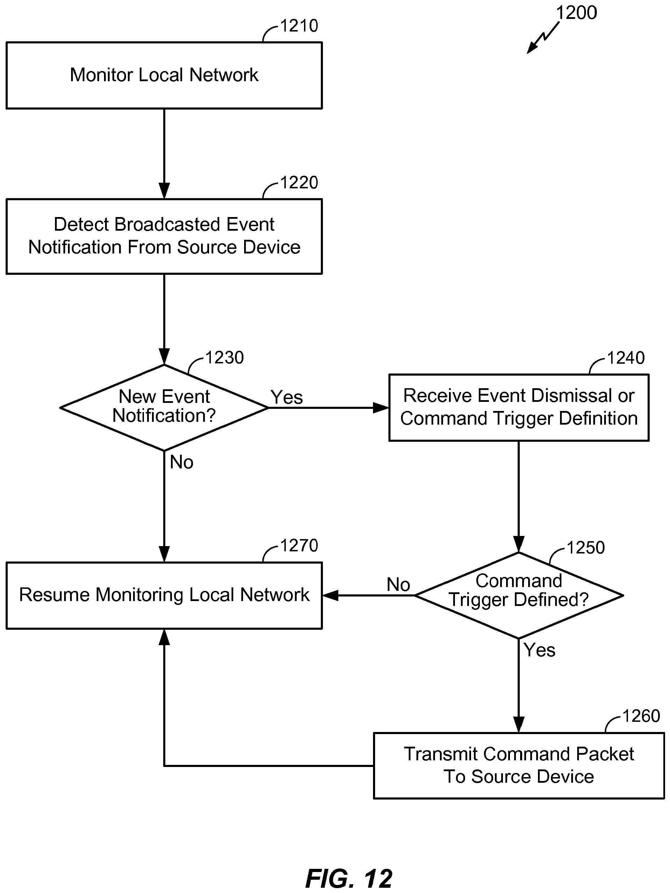

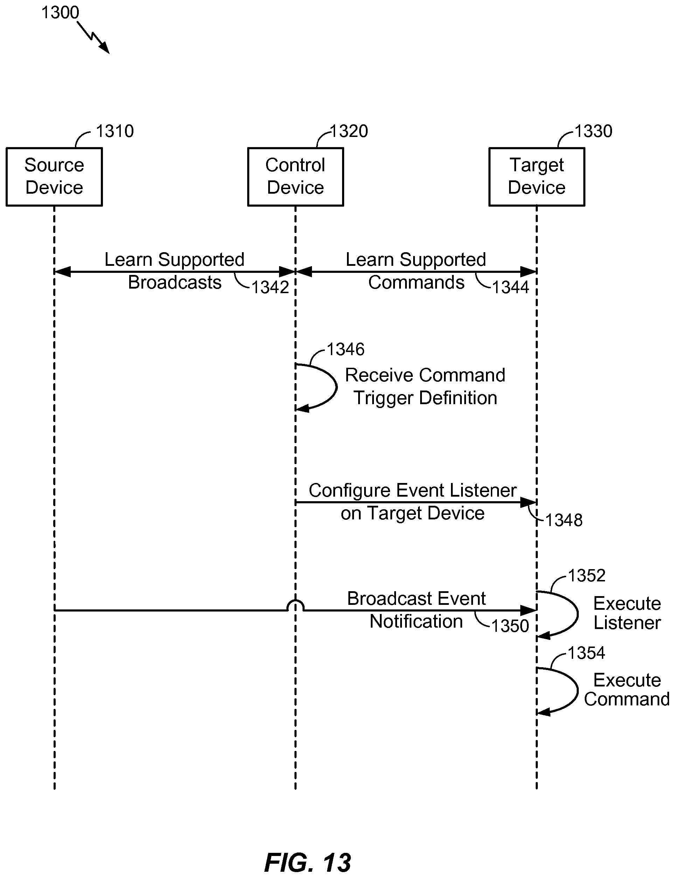

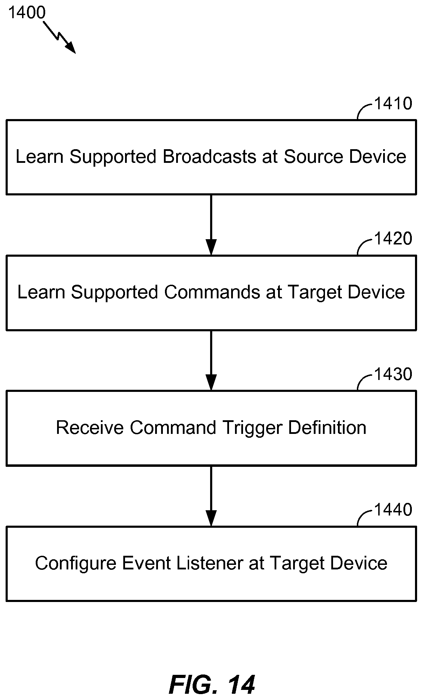

In the near future, with the increasing development in IoT technologies leading to numerous IoT devices surrounding a user at home, in vehicles, at work, and many other locations and personal spaces, many users will interact with different devices within particular environments in interrelated ways. Accordingly, various mechanisms described in further detail herein may allow users to link event notifications and control commands that heterogeneous devices support to automate common or routine activities that may be logically related. For example, in various embodiments, when an event notification broadcasted from a source device arrives at a control device (e.g., a smartphone or another suitable device), the user may be presented with an option to link the event notification to commands that can be triggered to control a target device. As such, in response to the user selecting the option to link the event notification, the user may be shown one or more controllable target devices and the user may define one or more commands to automatically trigger on the controllable target devices when the event notification occurs again in the future. For example, as will be described in further detail below with reference to FIG. 9 and FIG. 10, the control device may store the trigger definition and automatically call or otherwise invoke the command on the controllable target devices in response to subsequently detecting that the source device broadcasted the linked event notification. In another example, as will be described in further detail below with reference to FIG. 11 and FIG. 12, the control device may push the trigger definition and the linked command to the broadcasting source device, which may then invoke the linked command on the controllable target devices when broadcasting the event notification in the future. In still another example, as will be described in further detail below with reference to FIG. 13 and FIG. 14, the control device may configure a listener on the controllable target devices such that the controllable target devices may listen for the event notification from the broadcasting source device and then locally invoke the linked command in response to the configured listener detecting the event notification broadcasted from the source device.

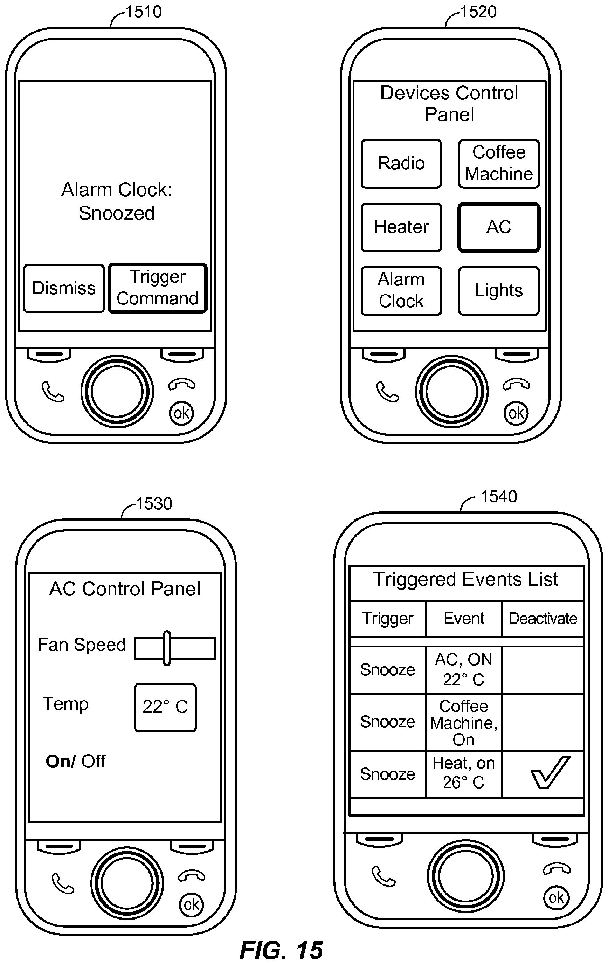

More particularly, according to various aspects, FIG. 9 illustrates an exemplary call flow 900 in which a control device 920 may trigger commands on a target device 930 in response to detecting an event notification broadcasted from a source device 910. In particular, the control device 920 (e.g., a smartphone or another suitable device) may be configured to monitor an IoT network or another suitable wireless network at 942, wherein the source device 910, the control device 920, and the target device 930 may each support a suitable proximity-based D2D protocol that may allow the source device 910, the control device 920, and the target device 930 to engage in direct communication over a proximity-based distributed bus (e.g., the AllJoyn™ software framework described in further detail above with respect to FIGS. 6-8). As such, in response to the source device 910 broadcasting a particular event notification at 944, the control device 920 may detect the broadcasted event notification at 946 and display a user interface that can be used to link the detected event notification with a command to trigger on the target device 930 and thereby control the target device 930. For example, in various embodiments, the source device 910 may comprise an alarm clock and the target device 930 may comprise an air conditioning unit. As such, the source device 910 may broadcast an "alarm clock snooze" event notification at 944, and in response to detecting the "alarm clock snooze" event notification, the control device 920 may display the user interface to allow the user to link the "alarm clock snooze" event to a command on one or more controllable target devices 930 (e.g., the air conditioning unit). For example, FIG. 15 illustrates an exemplary user interface 1510 that the control device 920 may display in response to detecting the "alarm clock snooze" event notification, wherein the user interface 1510 may allow the user to define a trigger command to link to the alarm clock snooze event notification, and the user interface 1510 may further provide the user with an alternative to dismiss the alarm clock snooze event notification without defining a trigger command to link thereto.

In various embodiments, in response to the user selecting the option to define a trigger command to link to the alarm clock snooze event notification (e.g., from the user interface 1510), the control device 920 may then display a devices control panel that shows one or more controllable target devices that can be linked to the alarm clock snooze event notification. For example, FIG. 15 further illustrates an exemplary devices control panel 1520 that may be displayed on the control device 920 in response to the user selecting the trigger command option from the user interface 1510, wherein the devices control panel 1520 may show that the alarm clock snooze event notification can be linked to commands on a radio, a coffee machine, a heater, and lights in addition to the air conditioning unit and the alarm clock that broadcasted the snooze event notification. As such, in response to the user selecting the air conditioning unit from the devices control panel 1520, the control device 920 may display a device-specific control panel associated with the air conditioning unit. For example, FIG. 15 further illustrates an exemplary device-specific control panel 1530 that the control device 920 may display in response to the user selecting the air conditioning unit from the devices control panel 1520, wherein the device-specific control panel 1530 may allow the user to trigger a command that links the alarm clock snooze event to a particular fan speed, temperature, and on/off state on the target device 930 (i.e., the air conditioning unit). Accordingly, returning to FIG. 9, the control device 820 may receive the user input(s) defining the command to link to the broadcasted event notification at 948, which the source device 910 may then store such that the command defined at 948 may be automatically triggered on the target device 930 in response to the source device 910 broadcasting the event notification again in the future. Furthermore, in various embodiments, the control device 920 may optionally display a deactivation screen in response to determining that the command linked to the broadcasted event notification conflicts with one or more trigger definitions that were previously configured. For example, FIG. 15 further illustrates an exemplary deactivation screen 1540 that may be displayed to resolve conflicting event triggers (e.g., a previous trigger definition may have linked the alarm clock snooze event to a particular command on the heater and the deactivation screen 1540 may be displayed to prompt the user to deactivate the previous trigger definition because the user most likely would not want the air conditioning unit and the heater to turn on in response to the same event notification). Accordingly, referring again to FIG. 9, the control device 920 may store the trigger definition linked to the alarm clock snooze event after the user has suitably defined the command to trigger on the target device 830 (and resolved any conflicting event triggers, if applicable). In various embodiments, the control device 920 may then continue to monitor the network at 950, wherein the source device 910 may again broadcast the event notification at 952 such that the control device detects the event notification at 954 and then triggers the previously defined command on the target device 930 at 956.

According to various aspects, FIG. 10 illustrates an exemplary method 1000 in which a control device may trigger commands on a target device in response to detecting an event notification broadcasted from a source device, which may generally be similar to the functions performed at the control device 920 shown in FIG. 9. In particular, at block 1010, the control device may monitor a local wireless network and subsequently detect an event notification that the source device broadcasts using a suitable proximity-based D2D protocol at block 1020. In response thereto, the control device may determine whether the event notification is a new (i.e., not previously observed) event notification at block 1030, in which case the control device may display a user interface at block 1040 to prompt a user to either dismiss the event notification or define a command to trigger on a target device, which may be linked to the event notification broadcasted from the source device. Accordingly, at block 1040, the control device may receive one or more user inputs either dismissing the event notification or defining a command trigger before resuming monitoring the local network block 1070. However, in the latter case where the inputs received at the control device define a command trigger, the control device may store the command trigger prior to resuming the local network monitoring such that the command may be automatically triggered on the target device in response to the source device broadcasting the event notification again in the future. For example, at block 1030, the control device would determine that the event notification broadcasted from the source device was previously observed and therefore is not new. Accordingly, at block 1050, the control device may determine whether an existing command trigger has been defined with respect to the event notification. More particularly, if the user previously dismissed the event notification, the control device may resume monitoring the local network at block 1070 without taking any further action. However, if the user previously defined a command trigger, the control device may communicate with the target device using D2D technology and invoke the command on the target device at block 1060 before continuing to monitor the local network at block 1070.

According to various aspects, FIG. 11 illustrates another exemplary call flow 1100 in which the control device 1120 may be used to trigger commands on the target device 1130 in response to event notifications broadcasted from the source device 1110. In particular, the call flow 1100 shown in FIG. 11 may be generally similar to the call flow 900 shown in FIG. 9 and described in further detail above, wherein the control device 1120 may monitor an IoT network or another suitable wireless network at 1142, display the user interface 1510 shown in FIG. 15 in response to detecting an event notification broadcasted from the source device 1110 at 1144, 1146, and further display the user interfaces 1520, 1530, 1540 shown in FIG. 15 to allow the user to define a trigger command to link to the event notification at 1148. However, the call flow 1100 shown in FIG. 11 may differ from the call flow 900 in FIG. 9 in that, at 1150, the control device 1120 may transmit a command packet to the broadcasting source device 1110 after the user has suitably defined the command to trigger on the target device 1130 based on the event notification broadcasted from the source device 1110. As such, at 1150, the control device 1120 may generally push the trigger definition and the linked command to the broadcasting source device 1110, which may then invoke the linked command on the controllable target device 1130 when the source device 1110 broadcasts the event notification again in the future at 1152, 1154. For example, in the exemplary use case described above, the source device 1110 may be an alarm clock, the target device 1130 may be an air conditioning unit, and the trigger definition may comprise turning the air conditioning unit on and setting the air conditioning unit to a particular fan speed and temperature in response to alarm clock broadcasting a snooze event notification. Accordingly, in that exemplary use case, the command packet transmitted from the control device 1120 to the source device 1110 may have the following exemplary format:

**Table 1 :: Exemplary Command Packet**

| |
|---|
| **From:** com.company1.eventTriggerApp.3890342 |
| **To:** com.company2.alarmclock.486814 |
| **OnEvent:** Snooze Notification |
| **ControlDestination:** com.company3.airconditioner.8961654 |
| **Interface:** com.company3.airconditioner.control |
| **Method:** activate |
| **ObjectPath:** /airconditioning |
| **Port:** 1200 |
| **Parameter:** MsgArg (contains temp, fanspeed, etc.) |

Accordingly, as shown in FIG. 11, the control device 1120 may transmit the command packet that may have the above format or another suitable format to the source device 1110 such that the source device 1110 may trigger the command defined in the command packet on the target device 1130 in response to broadcasting the event notification again in the future.

According to various aspects, FIG. 12 illustrates an exemplary method 1200 in which a control device may configure a source device to trigger a command on a target device in response to detecting an event notification broadcasted from the source device, which may generally be similar to the functions performed at the control device 1120 shown in FIG. 11. In particular, at block 1210, the control device may monitor a local wireless network and subsequently detect an event notification that the source device broadcasts using a suitable proximity-based D2D protocol at block 1220. In response thereto, the control device may determine whether the event notification is a new (i.e., not previously observed) event notification at block 1230, in which case the control device may display a user interface at block 1240 to prompt a user to either dismiss the event notification or define a command to trigger on a target device, which may be linked to the event notification broadcasted from the source device. Accordingly, at block 1240, the control device may receive one or more user inputs either dismissing the event notification or defining a command to trigger on the target device and to link to the event notification detected at block 1220. Accordingly, in response to determining at block 1250 that the inputs received at the control device defined a command trigger, the control device may transmit a command packet to the broadcasting source device at block 1260. In each case mentioned herein, the control device may then resume monitoring the local network at block 1270 and may not take any further action in response to detecting the same event notification again in the future. Instead, because the control device pushed the trigger definition and the linked command to the broadcasting source device at block 1260, the source device may subsequently invoke the linked command on the controllable target device whenever the source device broadcasts the event notification again in the future. As such, if the control device determines that the event notification is detected again at block 1230, the control device may simply resume monitoring the local network at block 1270 without taking further action because the source device was already provisioned with the command linked to the event notification.

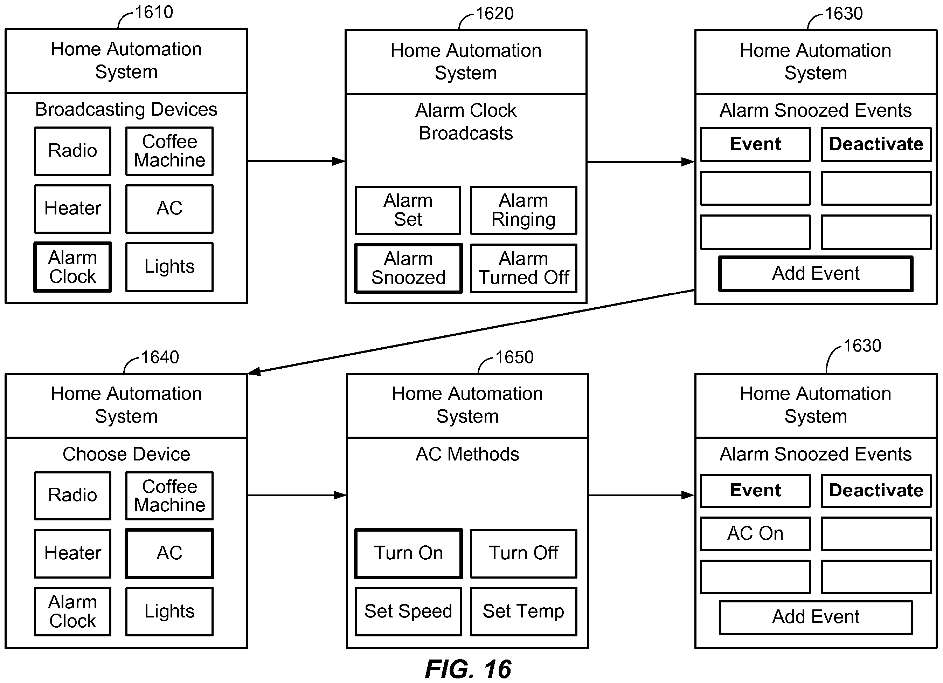

According to various aspects, FIG. 13 illustrates another exemplary call flow 1300 that may be used to trigger commands on a target device in response to event notifications broadcasted from a source device, wherein the call flow 1300 shown in FIG. 13 may be used in a context where the control device 1320 can configure a listener on the target device 1330 that causes the target device 1330 to listen for certain event notifications broadcasted from the source device 1310 and invoke certain local commands that may be linked to the event notifications in response to the listener detecting that the source device 1310 broadcasted the event notifications. In particular, at 1342, the control device 1320 may initially learn event notification broadcasts that are supported on the source device 1310, and at 1344, the control device 1320 may further learn one or commands that are supported on the target device 1330. Accordingly, in various embodiments, the control device 1320 may execute an appropriate application that allows a user to register broadcast listeners on controllable devices within a particular network environment. For example, referring to FIG. 16, the control device 1320 may display a user interface 1610 that shows one or more devices in the network environment that support event notification broadcasts in response to the user launching the application that allows the user to register the broadcast listeners (e.g., the user interface 1610 may include buttons that correspond to a radio, a coffee machine, a heater, an air conditioning unit, an alarm clock, lights, etc. that can broadcast certain event notifications).

Accordingly, in response to the user selecting the source device 1310 from the broadcasting devices shown in the user interface 1610, the control device 1320 may display another user interface 1620 that shows the specific event notification broadcasts that the source device 1310 learned are supported on the source device 1310 (e.g., in response to the user selecting the alarm clock from the user interface 1610, the control device 1320 may display the user interface 1620 to show that the alarm clock supports broadcasts that relate to an "alarm set" event, an "alarm ringing" event, an "alarm snoozed" event, an "alarm turned off' event, etc.). In various embodiments, the user may then select a particular event notification broadcast that the source device 1310 supports from the user interface 1620, which may cause the control device 1320 to display another user interface 1630 that shows commands that are linked to the selected event notification broadcast and provides an option to further link the selected event notification broadcast to a particular command on a controllable device within the network environment. For example, the user may select an "Add Event" option from the user interface 1630 and the control device 1320 may then display a user interface 1640 that shows the controllable devices in the network environment that can be configured to register listeners associated with the event notification broadcast that was selected from the user interface 1620 (e.g., the user interface 1640 may include buttons that correspond to the radio, coffee machine, heater, air conditioning unit, alarm clock, lights, etc.).

In various embodiments, in response to the user selecting the target device 1330 from the controllable devices shown in the user interface 1640, the control device 1320 may display another user interface 1650 that shows the specific methods or commands that the source device 1310 learned are supported on the target device 1330 (e.g., in response to the user selecting the air conditioning unit from the user interface 1640, the control device 1320 may display the user interface 1650 to show that the air conditioning unit supports methods or commands that may be used to turn the air conditioning unit on or off, set the fan speed on the air conditioning unit, set the temperature on the air conditioning unit, etc.). As such, in response to the user selecting a particular method or command from the user interface 1650, the control device 1320 may again display the user interface 1630 that shows commands that are linked to the selected event notification broadcast, wherein the user interface 1630 may now be populated with the method or command that was selected from the user interface 1650 to confirm that the selected method or command has been linked to the event notification broadcast selected from the user interface 1620. Referring to FIG. 13, the control device 1320 may then have received the command trigger definition at 1346. In various embodiments, at 1348, the control device 1320 may then configure or otherwise register the listener on the target device 1330 in response to the user having suitably linked the method or command supported at the target device 1330 with the event notification broadcast supported at the source device 1310. As such, the target device 1330 may execute the configured listener at 1352, which may generally cause the target device 1330 to listen for the event notification broadcast from the source device 1310 (e.g., the event notification broadcast selected from the user interface 1620). Accordingly, in response to the source device 1310 broadcasting the event notification at 1350, the target device 1330 may detect the event notification via the configured event listener and execute the method or command linked thereto at 1354 (e.g., the method or command selected from the user interface 1650) without further intervention via the control device 1320.

According to various aspects, FIG. 14 illustrates an exemplary method 1400 in which a control device may configure a target device to listen for an event notification broadcasted from a source device and trigger a command in response to detecting the event notification, which may generally be similar to the functions performed at the control device 1320 shown in FIG. 13. In particular, at block 1410, the control device may initially learn event notification broadcasts that are supported on the source device, and at block 1420, the control device may further learn one or commands that are supported on the target device. Accordingly, in various embodiments, the control device may execute an appropriate application that allows a user to define and register broadcast listeners on controllable devices within a particular network environment, wherein block 1430 may comprise receiving one or more such command trigger definitions (e.g., as described in further detail above with respect to FIG. 13 and FIG. 16). In various embodiments, in response to receiving one or more command trigger definitions at block 1430, the control device may create an event listener that links one or more methods or commands supported at the target device with one or more event notifications supported at the source device, wherein the control device may configure the event listener at the target device at block 1440. As such, the target device may then execute the configured listener, which may generally cause the target device to listen for the event notification broadcast from the source device (e.g., the event notification defined in the configured listener) and invoke the method or command linked thereto in response to detecting the event notification without further intervention via the control device.

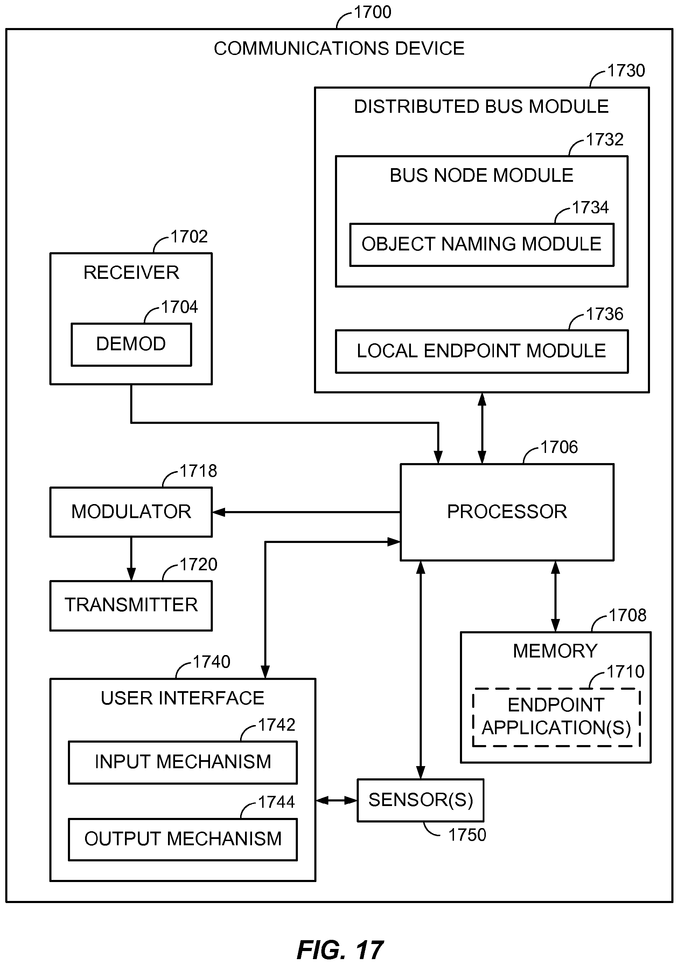

According to various aspects, FIG. 17 illustrates an exemplary communications device 1700 that may be used in connection with any of the various aspects and embodiments described herein through communication over a proximity-based distributed bus using discoverable D2D services. Accordingly, in context with the various aspects and embodiments described above that relate to methods to trigger commands on a target device according to event notifications broadcasted from a source device, the communication device 1700 shown in FIG. 17 may correspond to the source device 910, 1110, 1310, the control device 920, 1120, 1320, and/or the target device 930, 1130, 1330 respectively shown in FIG. 9, FIG. 11, and FIG. 13.

In various embodiments, as shown in FIG. 17, the communications device 1700 may comprise a receiver 1702 that may receive a signal from, for instance, a receive antenna (not shown), perform typical actions on the received signal (e.g., filtering, amplifying, downconverting, etc.), and digitize the conditioned signal to obtain samples. The receiver 1202 can comprise a demodulator 1704 that can demodulate received symbols and provide them to a processor 1706 for channel estimation. The processor 1706 can be dedicated to analyzing information received by the receiver 1702 and/or generating information for transmission by a transmitter 1720, control one or more components of the communications device 1700, and/or any suitable combination thereof.

In various embodiments, the communications device 1700 can additionally comprise a memory 1708 operatively coupled to the processor 1706, wherein the memory 1708 can store received data, data to be transmitted, information related to available channels, data associated with analyzed signal and/or interference strength, information related to an assigned channel, power, rate, or the like, and any other suitable information for estimating a channel and communicating via the channel. In various embodiments, the memory 1708 can include one or more local endpoint applications 1710, which may seek to communicate with endpoint applications, services, etc., on the communications device 1700 and/or other communications devices (not shown) through a distributed bus module 1730. The memory 1708 can additionally store protocols and/or algorithms associated with estimating and/or utilizing a channel (e.g., performance based, capacity based, etc.).

Those skilled in the art will appreciate that the memory 1708 and/or other data stores described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable PROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The memory 1708 in the subject systems and methods may comprise, without being limited to, these and any other suitable types of memory.

In various embodiments, the distributed bus module 1730 associated with the communications device 1700 can further facilitate establishing connections with other devices. The distributed bus module 1730 may further comprise a bus node module 1732 to assist the distributed bus module 1730 with managing communications between multiple devices. In various embodiments, the bus node module 1732 may further include an object naming module 1734 to assist the bus node module 1732 in communicating with endpoint applications associated with other devices. Still further, the distributed bus module 1730 may include an endpoint module 1736 to assist the local endpoint applications 1710 in communicating with other local endpoints and/or endpoint applications accessible on other devices through an established distributed bus. In another aspect, the distributed bus module 1730 may facilitate inter-device and/or intra-device communications over multiple available transports (e.g., Bluetooth, UNIX domain-sockets, TCP/IP, Wi-Fi, etc.). Accordingly, in various embodiments, the distributed bus module 1730 and the endpoint applications 1710 may be used to establish and/or join a proximity-based distributed bus over which the communication device 1700 can communicate with other communication devices in proximity thereto using direct device-to-device (D2D) communication.

Additionally, in various embodiments, the communications device 1700 may include a user interface 1740, which may include one or more input mechanisms 1742 for generating inputs into the communications device 1700, and one or more output mechanisms 1744 for generating information for consumption by the user of the communications device 1700. For example, the input mechanisms 1742 may include a mechanism such as a key or keyboard, a mouse, a touch-screen display, a microphone, etc. Further, for example, the output mechanisms 1744 may include a display, an audio speaker, a haptic feedback mechanism, a Personal Area Network (PAN) transceiver etc. In the illustrated aspects, the output mechanisms 1744 may include an audio speaker operable to render media content in an audio form, a display operable to render media content in an image or video format and/or timed metadata in a textual or visual form, or other suitable output mechanisms. However, in various embodiments, a headless communications device 1700 may not include certain input mechanisms 1742 and/or output mechanisms 1744 because headless devices generally refer to computer systems or device that have been configured to operate without a monitor, keyboard, and/or mouse.

Furthermore, in various embodiments, the communications device 1700 may include one or more sensors 1750 that can obtain various measurements relating to a local environment associated with the communications device 1700. For example, in various embodiments, the sensors 1750 may include an accelerometer, gyroscope, or other suitable sensors that can obtain measurements that relate to inflicted motion at the communications device 1700. In another example, the sensors 1750 may include appropriate hardware, circuitry, or other suitable devices that can obtain measurements relating to internal and/or ambient temperature, power consumption, local radio signals, lighting, and/or other local and/or ambient environmental variables.

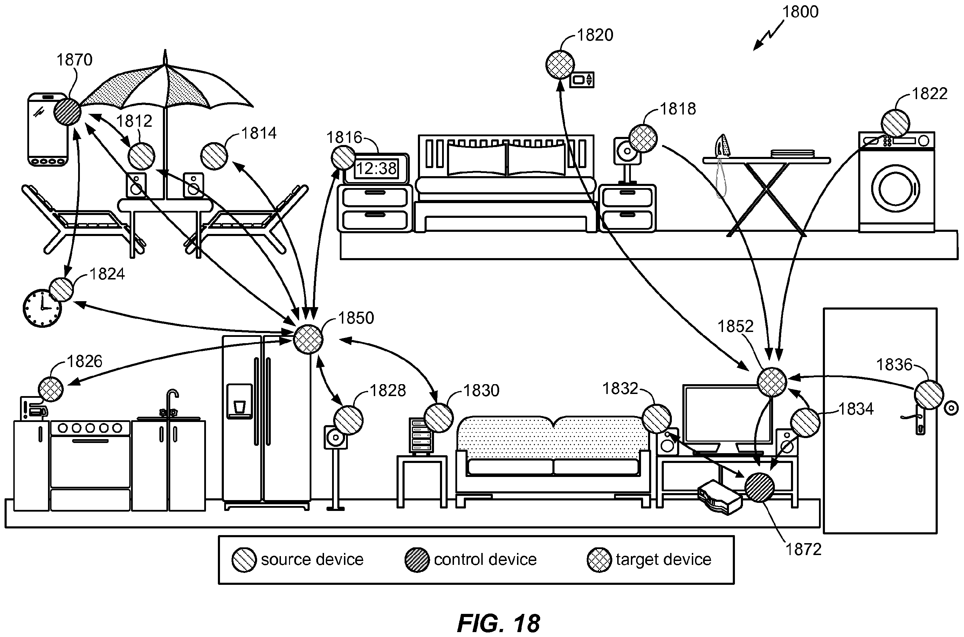

According to various aspects, FIG. 18 illustrates an exemplary connected home network environment 1800 in which any of the various methods for triggering commands on a target device in response to broadcasted event notifications from a source device can be used, wherein the exemplary connected home network environment 1800 may include various IoT devices may be configured to interact with one another in various ways to carry out the various methods for triggering commands on a target device as described in further detail above. For example, in the example shown in FIG. 18, the connected home network environment 1800 includes a smartphone 1870, outdoor speakers 1812, 1814, an alarm clock 1816, bedroom speakers 1818, a thermostat 1820, a laundry machine 1822, a wall clock 1824, a coffee maker 1826, a living room floor speaker 1828, a bookshelf audio system 1830, home theater speakers 1832, 1834, a doorknob 1836, a refrigerator 1850, a television 1852, a smartphone 1870, and a wireless router or home gateway 1872. Furthermore, as shown in FIG. 18, the various IoT devices in the home network environment 1800 may be configured to operate in one or more of the various roles described in further detail above (e.g., the control device, the source device, the target device, etc.). Accordingly, in various embodiments, the smartphone 1870, the wireless router or home gateway 1872, or another suitable device in the environment 1800 may operate as the control device that can trigger commands on one or more target devices in response to detecting an event notification broadcasted from one or more source devices. For example, in one embodiment, the smartphone 1870 may monitor the local environment 1800 and detect an event notification that the alarm clock 1816 broadcasts using a suitable proximity-based D2D protocol, and in response thereto, the smartphone 1870 may communicate with one or more target devices using D2D technology to invoke a previously defined command trigger (e.g., turning up the temperature on the thermostat 1820, turning on the coffee machine 1826, etc.). In another example, the smartphone 1870 may transmit a command packet to the alarm clock 1816 when the command trigger is initially defined such that the alarm clock 1816 may subsequently invoke the linked command on the controllable target device(s) whenever broadcasting the same event notification again in the future. In still another example, the smartphone 1870 may learn event notifications and commands that are supported on the various IoT devices in the environment 1800 such that a user can define and register broadcast listeners on one or more of the IoT devices in the network environment 1800. As such, in response to receiving one or more command trigger definitions from the user, the smartphone 1870 may create an event listener that links one or more methods or commands supported at a particular target device with one or more event notifications supported at a particular source device and configure the event listener at the target device, whereby the target device may execute the configured listener and invoke the method or command linked thereto in response to detecting the event notification from the source device without further intervention via the smartphone 1870.

Those skilled in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those skilled in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted to depart from the scope of the various aspects and embodiments described herein.

The various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices (e.g., a combination of a DSP and a microprocessor, a plurality of microprocessors, one or more microprocessors in conjunction with a DSP core, or any other such configuration).

The methods, sequences and/or algorithms described in connection with the aspects disclosed herein may be embodied directly in hardware, in a software module executed by a processor, or in a combination of the two. A software module may reside in RAM, flash memory, ROM, EPROM, EEPROM, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in an IoT device. In the alternative, the processor and the storage medium may reside as discrete components in a user terminal.

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, DSL, or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes CD, laser disc, optical disc, DVD, floppy disk and Blu-ray disc where disks usually reproduce data magnetically and/or optically with lasers. Combinations of the above should also be included within the scope of computer-readable media.

While the foregoing disclosure shows illustrative aspects and embodiments, those skilled in the art will appreciate that various changes and modifications could be made herein without departing from the scope of the disclosure as defined by the appended claims. The functions, steps and/or actions of the method claims in accordance with the aspects and embodiments described herein need not be performed in any particular order. Furthermore, although elements may be described above or claimed in the singular, the plural is contemplated unless limitation to the singular is explicitly stated.

## Claims

1. A method for triggering commands based on event notifications, comprising:
identifying (1146, 1342), at a control device (1120, 1320), an event notification supported on a source device (1110, 1310);
identifying, at the control device (1120, 1320), one or more commands supported on a target device (1130, 1330);
displaying at the control device, the one or more commands for selection by a user;
defining (1148, 1346), at the control device, a trigger that links the event notification supported on the source device to a user selected command of the one or more commands supported on the target device, wherein the defined trigger causes the target device to execute the identified command in response to the source device broadcasting the identified event notification;
the method **characterized in** further comprising transmitting (1150), from the control device (1120) to the source device (1110), the trigger that links the event notification supported on the source device (1110) to the command supported on the target device (1130), wherein the transmitted trigger causes the source device (1110) to directly invoke the command on the target device (1130), without communicating with the control device, when the source device broadcasts (1152) the identified event notification.

2. The method recited in claim 1, further comprising:
configuring (1348), by the control device (1320), a listener associated with the defined trigger on the target device (1330), wherein the configured listener causes the target device to listen for the identified event notification and execute (1354) the identified command in response to detecting (1352) that the source device broadcasted (1350) the event notification linked to the identified command.

3. The method recited in claim 1, further comprising:
defining, at the control device (1120, 1320), a target trigger that links the event notification supported on the source device (910, 1110, 1310) to a target command supported on a third device, wherein the target trigger causes the third device to execute the target command in response to the source device (910, 1110, 1310) broadcasting the identified event notification.

4. The method recited in claim 1, wherein defining the trigger further comprises:
deactivating one or more existing triggers that link the identified event notification to one or more commands that conflict with the command supported on the target device.

5. The method recited in claim 1, wherein:
the control device (920, 1120, 1320), the source device (910, 1110, 1310), and the target device (930, 1130, 1330) communicate wirelessly using a proximity-based device-to-device protocol; or
the source device (910, 1110, 1310) and the target device (930, 1130, 1330) comprise Internet of Things devices.

6. A control device (920, 1120, 1320) for triggering commands based on event notifications, comprising:
means for identifying an event notification supported on a source device;
means for identifying one or more commands supported on a target device;
means for displaying at the control device, the one or more commands for selection by a user;
means for defining a trigger that links the event notification supported on the source device to a user selected command of the one or more commands supported on the target device, wherein the defined trigger causes the target device to execute the identified command in response to the source device broadcasting the identified event notification;
the control device **characterized in** further comprising means for transmitting (1150), from the control device (1120) to the source device (1110), the trigger that links the event notification supported on the source device (1110) to the command supported on the target device (1130), wherein the transmitted trigger causes the source device (1110) to directly invoke the command on the target device (1130), without communicating with the control device, when the source device broadcasts (1152) the identified event notification.

7. The control device recited in claim 6, further comprising:
means for configuring a listener associated with the defined trigger on the target device, wherein the configured listener causes the target device to listen for the identified event notification and execute the identified command in response to detecting that the source device broadcasted the event notification linked to the identified command.

8. The control device recited in claim 6, further comprising:
means for defining a second trigger that links the event notification supported on the source device to a second command supported on a third device, wherein the second trigger causes the third device to execute the second command in response to the source device broadcasting the identified event notification.

9. The control device recited in claim 6 , wherein the means for defining the trigger further comprises:
means for deactivating one or more existing triggers that link the identified event notification to a command that conflicts with the command supported on the target device; or
means for communicating wirelessly with the source device and the target device using a proximity-based device-to-device protocol.

10. The control device of any one of claims 6 to 9, comprising:
one or more processors (1706), wherein said one or more processors are configured to provide:
the means for identifying an event notification;
the means for identifying a command; and
the means for defining a trigger.

11. A non-transitory computer-readable storage medium having computer-executable instructions recorded thereon, wherein executing the computer-executable instructions on a computer causes the computer to perform a method according to any one of claims 1 to 5.

## Patentansprüche

1. Ein Verfahren zum Auslösen von Befehlen basierend auf Ereignisbenachrichtigungen, aufweisend:
Identifizieren (1146, 1342), an einem Steuergerät (1120, 1320), einer Ereignisbenachrichtigung, die an einem Quellgerät (1110, 1310) unterstützt wird,
Identifizieren, an dem Steuergerät (1120, 1320), eines oder mehrerer Befehle, die an einem Zielgerät (1130, 1330) unterstützt werden,
Anzeigen, an dem Steuergerät, des einen oder der mehreren Befehle für die Auswahl durch einen Benutzer,
Definieren (1148, 1346), an dem Steuergerät, eines Auslösers, der die an dem Quellgerät unterstützte Ereignisbenachrichtigung mit einem durch den Benutzer ausgewählten Befehl aus dem einen oder den mehreren an dem Zielgerät unterstützten Befehlen verknüpft, wobei der definierte Auslöser veranlasst, dass das Zielgerät den identifizierten Befehl in Antwort darauf ausführt, dass das Quellgerät die identifizierte Ereignisbenachrichtigung broadcastet,
wobei das Verfahren **dadurch gekennzeichnet ist, dass** es weiterhin aufweist:
Senden (1150), von dem Steuergerät (1120) an das Quellgerät (1110), des Auslösers, der die an dem Quellgerät (1110) unterstützte Ereignisbenachrichtigung mit dem an dem Zielgerät (1130) unterstützten Befehl verknüpft, wobei der gesendete Auslöser veranlasst, dass das Quellgerät (1110) direkt den Befehl an dem Zielgerät (1130) aufruft, ohne mit dem Steuergerät zu kommunizieren, wenn das Quellgerät die identifizierte Ereignisbenachrichtigung broadcastet (1152).

2. Verfahren nach Anspruch 1, das weiterhin aufweist:
Konfigurieren (1348), durch das Steuergerät (1320), eines Hörers, der mit dem definierten Auslöser an dem Zielgerät (1330) assoziiert ist, wobei der konfigurierte Hörer veranlasst, dass das Zielgerät auf die identifizierte Ereignisbenachrichtigung hört und den identifizierten Befehl in Antwort darauf ausführt (1354), dass erfasst wird (1352), dass das Quellgerät die mit dem identifizierten Befehl verknüpfte Ereignisbenachrichtigung gebroadcastet hat (1350).

3. Verfahren nach Anspruch 1, das weiterhin aufweist:
Definieren, an dem Steuergerät (1120, 1320), eines Zielauslösers, der die an dem Quellgerät (910, 1110, 1310) unterstützte Ereignisbenachrichtigung mit einem an einem dritten Gerät unterstützten Zielbefehl verknüpft, wobei der Zielauslöser veranlasst, dass das dritte Gerät den Zielbefehl in Antwort darauf ausführt, dass das Zielgerät (910, 1110, 1310) die identifizierte Ereignisbenachrichtigung broadcastet.

4. Verfahren nach Anspruch 1, wobei das Definieren des Auslösers weiterhin aufweist:
Deaktivieren eines oder mehrerer bestehender Auslöser, die die identifizierte Ereignisbenachrichtigung mit einem oder mehreren Befehlen verknüpfen, die in Konflikt mit dem an dem Zielgerät unterstützten Befehl stehen.

5. Verfahren nach Anspruch 1, wobei:
das Steuergerät (920, 1120, 1320), das Quellgerät (910, 1110, 1310) und das Zielgerät (930, 1130, 1330) drahtlos unter Verwendung eines Nähebasierten Gerät-zu-Gerät-Protokolls kommunizieren, oder
das Quellgerät (910, 1110, 1310) und das Zielgerät (930, 1130, 1330) Internet-of-Things-Geräte sind.

6. Ein Steuergerät (920, 1120, 1320) zum Auslösen von Befehlen basierend auf Ereignisbenachrichtigungen, aufweisend:
Mittel zum Identifizieren einer Ereignisbenachrichtigung, die an einem Quellgerät unterstützt wird,
Mittel zum Identifizieren eines oder mehrerer Befehle, die an einem Zielgerät unterstützt werden,
Mittel zum Anzeigen, an dem Steuergerät, des einen oder der mehreren Befehle für die Auswahl durch einen Benutzer,
Mittel zum Definieren eines Auslösers, der die an dem Quellgerät unterstützte Ereignisbenachrichtigung mit einem durch den Benutzer ausgewählten Befehl aus dem einen oder den mehreren an dem Zielgerät unterstützten Befehlen verknüpft, wobei der definierte Auslöser veranlasst, dass das Zielgerät den identifizierten Befehl in Antwort darauf ausführt, dass das Quellgerät die identifizierte Ereignisbenachrichtigung broadcastet,
wobei das Steuergerät **dadurch gekennzeichnet ist, dass** es weiterhin aufweist:
Mittel zum Senden (1150), von dem Steuergerät (1120) an das Quellgerät (1110), des Auslösers, der die an dem Quellgerät (1110) unterstützte Ereignisbenachrichtigung mit dem an dem Zielgerät (1130) unterstützten Befehl verknüpft, wobei der gesendete Auslöser veranlasst, dass das Quellgerät (1110) direkt den Befehl an dem Zielgerät (1130) aufruft, ohne mit dem Steuergerät zu kommunizieren, wenn das Quellgerät die identifizierte Ereignisbenachrichtigung broadcastet (1152).

7. Steuergerät nach Anspruch 6, das weiterhin aufweist:
Mittel zum Konfigurieren eines Hörers, der mit dem definierten Auslöser an dem Zielgerät assoziiert ist, wobei der konfigurierte Hörer veranlasst, dass das Zielgerät auf die identifizierte Ereignisbenachrichtigung hört und den identifizierten Befehl in Antwort darauf ausführt, dass erfasst wird, dass das Quellgerät die mit dem identifizierten Befehl verknüpfte Ereignisbenachrichtigung gebroadcastet hat.

8. Steuergerät nach Anspruch 6, das weiterhin aufweist:
Mittel zum Definieren eines zweiten Auslösers, der die an dem Quellgerät unterstützte Ereignisbenachrichtigung mit einem an einem dritten Gerät unterstützten zweiten Befehl verknüpft, wobei der zweite Auslöser veranlasst, dass das dritte Gerät den zweiten Befehl in Antwort darauf ausführt, dass das Zielgerät die identifizierte Ereignisbenachrichtigung broadcastet.

9. Steuergerät nach Anspruch 6, wobei die Mittel zum Definieren des Auslösers weiterhin aufweisen:
Mittel zum Deaktivieren eines oder mehrerer bestehender Auslöser, die die identifizierte Ereignisbenachrichtigung mit einem Befehl verknüpfen, der in Konflikt mit dem an dem Zielgerät unterstützten Befehl steht, oder
Mittel zum drahtlosen Kommunizieren mit dem Quellgerät und dem Zielgerät unter Verwendung eines Nähe-basierten Gerät-zu-Gerät-Protokolls.

10. Steuergerät nach einem der Ansprüche 6 bis 9, aufweisend:
einen oder mehrere Prozessoren (1706), wobei der eine oder die mehreren Prozessoren konfiguriert sind zum Vorsehen:
der Mittel zum Identifizieren einer Ereignisbenachrichtigung,
der Mittel zum Identifizieren eines Befehls, und
der Mittel zum Definieren eines Auslösers.

11. Ein nicht-transitorisches, computerlesbares Speichermedium mit darauf aufgezeichneten computerausführbaren Befehlen, wobei eine Ausführung der computerausführbaren Befehle auf einem Computer den Computer zum Durchführen eines Verfahrens gemäß den Ansprüchen 1 bis 5 veranlasst.

## Revendications

1. Procédé pour déclencher des commandes sur la base de notifications d'événements, comprenant les étapes consistant à :
identifier (1146, 1342), au niveau d'un dispositif de commande (1120, 1320), une notification d'événement prise en charge au niveau d'un dispositif source (1110, 1310) ;
identifier, au niveau du dispositif de commande (1120, 1320), une ou plusieurs commandes prises en charge au niveau d'un dispositif cible (1130, 1330) ;
afficher au niveau du dispositif de commande, la ou les commandes à sélectionner par un utilisateur ;
définir (1148, 1346), au niveau du dispositif de commande, un déclencheur qui relie la notification d'événement prise en charge au niveau du dispositif source à une commande sélectionnée par l'utilisateur parmi une ou plusieurs commandes prises en charge au niveau du dispositif cible, le déclencheur défini amenant le dispositif cible à exécuter la commande identifiée en réponse à la diffusion par le dispositif source de la notification d'événement identifiée ;
le procédé étant **caractérisé en ce qu'**il comprend en outre l'étape consistant à transmettre (1150), du dispositif de commande (1120) au dispositif source (1110), le déclencheur qui relie la notification d'événement prise en charge au niveau du dispositif source (1110) à la commande prise en charge au niveau du dispositif cible (1130), dans lequel le déclencheur transmis amène le dispositif source (1110) à appeler directement la commande au niveau du dispositif cible (1130), sans communiquer avec le dispositif de commande, lorsque le dispositif source diffuse (1152) la notification d'événement identifiée.

2. Procédé selon la revendication 1, comprenant en outre :
la configuration (1348), par le dispositif de commande (1320), d'un écouteur associé au déclencheur défini au niveau du dispositif cible (1330), dans lequel l'écouteur configuré amène le dispositif cible à écouter pour la notification d'événement identifié et exécuter (1354) la commande identifiée en réponse à la détection (1352) du fait que le dispositif source a diffusé (1350) la notification d'événement liée à la commande identifiée.

3. Procédé selon la revendication 1, comprenant en outre :
la définition, au niveau du dispositif de commande (1120, 1320), d'un déclencheur cible qui relie la notification d'événement prise en charge au niveau du dispositif source (910, 1110, 1310) à une commande cible prise en charge au niveau d'un troisième dispositif, le déclencheur cible entraînant l'exécution au niveau du troisième dispositif de la commande cible en réponse à la diffusion par le dispositif source (910, 1110, 1310) de la notification d'événement identifiée.

4. Procédé selon la revendication 1, dans lequel la définition du déclencheur comprend en outre :
la désactivation d'un ou plusieurs déclencheurs existants qui relient la notification d'événement identifié à une ou plusieurs commandes en conflit avec la commande prise en charge au niveau du dispositif cible.

5. Procédé selon la revendication 1, dans lequel :
le dispositif de commande (920, 1120, 1320), le dispositif source (910, 1110, 1310) et le dispositif cible (930, 1130, 1330) communiquent sans fil en utilisant un protocole de dispositif à dispositif basé sur la proximité ; ou
le dispositif source (910, 1110, 1310) et le dispositif cible (930, 1130, 1330) comprennent des dispositifs Internet of Things.

6. Dispositif de commande (920, 1120, 1320) pour déclencher des commandes sur la base de notifications d'événements, comprenant :
des moyens pour identifier une notification d'événement prise en charge au niveau d'un dispositif source ;
des moyens pour identifier une ou plusieurs commandes prises en charge au niveau d'un équipement cible ;
des moyens pour afficher au niveau du dispositif de commande, la ou les commandes à sélectionner par un utilisateur ;
des moyens pour définir un déclencheur qui relie la notification d'événement prise en charge au niveau du dispositif source à une commande sélectionnée par l'utilisateur parmi la ou des commandes prises en charge au niveau du dispositif cible, le déclencheur défini amenant le dispositif cible à exécuter la commande identifiée en réponse à la diffusion par le dispositif source de la notification d'événement identifiée ;
le dispositif de commande étend **caractérisé en ce qu'**il comprend en outre
des moyens pour transmettre (1150), du dispositif de commande (1120) au dispositif source (1110), le déclencheur qui relie la notification d'événement prise en charge au niveau du dispositif source (1110) à la commande prise en charge au niveau du dispositif cible (1130), dans lequel le déclencheur transmis amène le dispositif source (1110) à appeler directement la commande au niveau du dispositif cible (1130), sans communiquer avec le dispositif de commande, lorsque le dispositif source diffuse (1152) la notification d'événement identifiée.

7. Dispositif de commande selon la revendication 6, comprenant en outre:
des moyens pour configurer un écouteur associé au déclencheur défini sur le dispositif cible, dans lequel l'écouteur configuré amène le dispositif cible à écouter la notification d'événement identifié et à exécuter la commande identifiée en réponse à la détection du fait que le dispositif source a diffusé la notification d'événement liée à la commande identifiée.

8. Dispositif de commande selon la revendication 6, comprenant en outre:
des moyens pour définir un deuxième déclencheur qui relie la notification d'événement prise en charge au niveau du dispositif source à une deuxième commande prise en charge au niveau d'un troisième dispositif, dans lequel le deuxième déclencheur amène le troisième dispositif à exécuter la deuxième commande en réponse à la diffusion par le dispositif source de la notification d'événement identifiée.

9. Dispositif de commande selon la revendication 6, dans lequel les moyens pour définir le déclencheur comprennent en outre :
des moyens pour désactiver un ou plusieurs déclencheurs existants qui relient la notification d'événement identifié à une commande qui entre en conflit avec la commande prise en charge au niveau du dispositif cible ; ou
des moyens pour communiquer sans fil avec le dispositif source et le dispositif cible en utilisant un protocole dispositif à dispositif basé sur la proximité.

10. Dispositif de commande selon l'une quelconque des revendications 6 à 9, comprenant :
un ou plusieurs processeurs (1706), dans lequel lesdits un ou plusieurs processeurs sont configurés pour fournir :
les moyens pour identifier une notification d'événement ;
les moyens pour identifier une commande ; et
les moyens pour définir un déclencheur.

11. Support de stockage non transitoire lisible par ordinateur sur lequel sont enregistrées des instructions exécutables par ordinateur, dans lequel l'exécution des instructions exécutables par ordinateur sur un ordinateur amène l'ordinateur à exécuter un procédé selon l'une quelconque des revendications 1 à 5.
